(19) Europäisches Patentamt
European Patent Office
Office européen des brevets

(11) EP 0 663 892 B1

(12) FASCICULE DE BREVET EUROPEEN

(45) Date de publication et mention de la délivrance du brevet: **18.06.1997 Bulletin 1997/25**

(21) Numéro de dépôt: **93922978.7**

(22) Date de dépôt: **11.10.1993**

(51) Int. Cl.[6]: **C04B 24/00**, C07F 9/38, C08G 65/32, B01F 17/00

(86) Numéro de dépôt international: **PCT/FR93/01004**

(87) Numéro de publication internationale: **WO 94/08913 (28.04.1994 Gazette 1994/10)**

# (54) FLUIDIFIANTS POUR SUSPENSIONS AQUEUSES DE PARTICULES MINERALES ET PATES DE LIANT HYDRAULIQUE

VERFLÜSSIGER FÜR WASSERSUSPENDIERTE PARTIKELN UND PASTEN AUS HYDRAULISCHEN BINDERN

THINNERS FOR AQUEOUS SUSPENSIONS OF MINERAL PARTICLES AND HYDRAULIC BINDER PASTES

(84) Etats contractants désignés: **AT BE CH DE DK ES FR GB GR IE IT LI LU MC NL PT SE**

(30) Priorité: **12.10.1992 FR 9212496**

(43) Date de publication de la demande: **26.07.1995 Bulletin 1995/30**

(73) Titulaire: **CHRYSO**
**92120 Montrouge (FR)**

(72) Inventeurs:
- **GUICQUERO, Jean-Pierre**
  **F-38300 Meyrie (FR)**
- **MOSQUET, Martin**
  **F-45300 Pithiviers (FR)**
- **CHEVALIER, Yves**
  **F-69540 Irigny (FR)**
- **LE PERCHEC, Pierre**
  **F-69003 Lyon (FR)**

(74) Mandataire: **Tilloy, Anne-Marie et al**
**IXAS Conseil,**
**15, rue Emile Zola**
**69002 Lyon (FR)**

(56) Documents cités:
**EP-A- 0 118 316**
**US-A- 3 615 779**
**US-A- 3 718 603**
**US-A- 5 069 798**

EP 0 663 892 B1

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

Printed by Rank Xerox (UK) Business Services
2.14.8/3.4

## Description

L'invention concerne l'utilisation de composés comportant au moins un groupement amino-alkylène phosphonique et au moins une chaîne polyoxyalkylée, et de leurs sels, comme agents fluidifiants.

L'invention concerne également de nouveaux composés comportant au moins un groupement amino-alkylène phosphonique et au moins une chaîne polyoxyalkylée, ainsi que leurs sels.

## ETAT DE LA TECHNIQUE

Il est connu d'introduire des fluidifiants dans les suspensions aqueuses de particules minérales pour en abaisser la viscosité ou pour diminuer la teneur en eau de ces suspensions. Les suspensions concernées sont notamment des suspensions de sels de calcium, comme le carbonate de calcium ou le sulfate de calcium, ou des suspensions d'oxydes minéraux, comme le dioxyde de titane ou l'oxyde de fer. Ce n'est qu'après avoir été fluidifiées que ces suspensions peuvent servir à la préparation de produits industriels divers dont des peintures, des produits pour l'enduction du papier et des formulations pour des caoutchoucs et pour des résines synthétiques.

Il est également connu d'ajouter aux liants hydrauliques tels que les ciments, les plâtres, les sulfates de calcium ou la chaux, des fluidifiants pour diminuer la teneur en eau de la pâte de liant hydraulique. De ce fait, la pâte de liant hydraulique présente, après durcissement, une structure plus dense. Ceci se traduit par une résistance mécanique plus élevée.

Comme on peut le comprendre assez aisément au travers du cas particulier de l'enduction des papiers, les suspensions de particules minérales, d'une manière générale, doivent disposer d'une viscosité faible pour faciliter leur manipulation et leur application de même qu'une teneur en matière minérale la plus élevée possible afin de diminuer la quantité d'énergie calorifique nécessaire à l'évacuation par séchage de leur fraction aqueuse. L'obtention de ces qualités dans des conditions économiques acceptables ne peut généralement être cumulée qu'en ayant recours à des fluidifiants.

Pour des raisons économiques également, on exige des fluidifiants qu'ils permettent d'obtenir des fluidités très élevées et stables même lorsqu'ils sont présents dans la suspension en très petites quantités. Mais comme de nombreux fluidifiants proposés dans l'art antérieur, comme ceux à base de polyélectrolytes, voient leurs effets fluidifiants diminuer quand la teneur en électrolyte des mélanges à fluidifier augmente, on est donc obligé d'augmenter les quantités de ces fluidifiants pour atteindre la viscosité recherchée.

Egalement, on recherche des fluidifiants, qui lorsqu'ils sont mis en oeuvre dans des mélanges complexes, ne présentent pas une fonction secondaire risquant de perturber les caractéristiques du mélange en cause. Ainsi, dans le domaine des liants hydrauliques par exemple, il ne suffit pas qu'un fluidifiant permette d'obtenir des suspensions de particules de liant hydraulique d'une fluidité satisfaisante, il faut, en outre, que sa mise en oeuvre permette la prise du liant hydraulique et l'obtention d'un produit de bonne qualité.

Dans le domaine des compositions pour ciment de forage, la demande de brevet européen n°444 542 propose d'utiliser comme fluidifiants des composés répondant à l'une des formules :

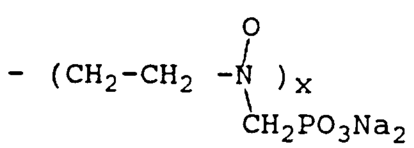

ou

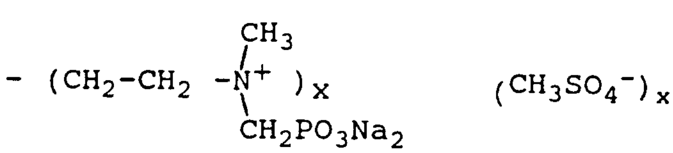

dans lesquelles x est supérieur ou égal à 10.

La présence de ces composés dans des compositions de ciment de forage doit permettre de diminuer la viscosité au point de rendre lesdites compositions pompables dans des conditions d'écoulement turbulent, même en présence de sels.

L'inconvénient majeur de ces fluidifiants réside dans les retards de prise extrêmement importants qu'ils génèrent.

Ils ont dès lors des applications très limitées et ils ne peuvent pas être mis en oeuvre lorsque les temps de prise recherchés de la pâte de liant hydraulique doivent être relativement brefs.

On connaît aussi des fluidifiants dont l'utilisation affecte moins les temps de prise des pâtes de liant hydraulique avec lequelles ils sont mélangés. Les plus connus sont des fluidifiants à base de résines obtenues par condensation de naphtalène sulfoné avec du formaldéhyde ou par condensation de mélamine avec du formaldéhyde et un composé sulfoné.

Ainsi, le brevet européen n°99 954 concerne des fluidifiants hydrosolubles obtenus par condensation d'acide amino-sulfonique comportant au moins un noyau aromatique avec des produits azotés porteurs de plusieurs fonctions amines et du formaldéhyde.

Si ces fluidifiants ne retardent pas de façon notable la prise des liants hydrauliques, ils présentent néanmoins une activité limitée et ceci d'autant plus que le mélange à fluidifier contient une quantité non négligeable d'électrolyte. Un autre inconvénient de ces fluidifiants est de ne pouvoir être disponibles que sous forme de solutions aqueuses à des concentrations limitées, généralement au plus égales à 40 %, car l'augmentation de la concentration entraîne celle de la viscosité de ces solutions, ce qui limite leur usage.

Il n'existe donc pas dans l'état de la technique de fluidifiants remplissant cumulativement les conditions suivantes :

- un conditionnement sous forme concentrée ou sous forme pulvérulente pour faciliter les stockages et les transports,
- une grande stabilité, même en solution concentrée,
- un pouvoir fluidifiant élevé à l'égard d'un grand nombre de particules minérales de nature chimique diverse,
- une viscosité en solution concentrée qui soit suffisamment basse, à température ambiante, quelles que soient les saisons, de façon à faciliter leur emploi et éviter toutes opérations supplémentaires du type chauffage,
- une viscosité des suspensions constante dans le temps et qui reste faible malgré l'introduction d'un ou de plusieurs électrolytes.

## EXPOSE SOMMAIRE DE L'INVENTION

De façon surprenante, il a été découvert que les objectifs précités sont atteints lorsque l'on utilise, comme agents fluidifiants pour suspensions aqueuses de particules minérales et pâtes de liant hydraulique, des composés (I) ou les sels des composés (I), lesdits composés (I) répondant à la formule suivante :

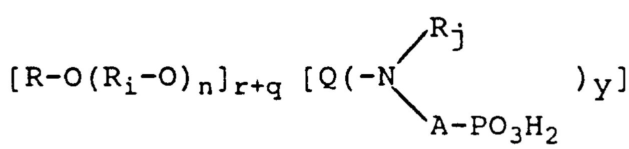

dans laquelle :

- R est un atome d'hydrogène ou un groupe hydrocarboné monovalent comportant de 1 à 18 inclus atomes de carbone et éventuellement un ou plusieurs hétéroatomes,
- les $R_i$ sont semblables ou différents entre eux et représentent un alkylène comme l'éthylène, le propylène, le butylène, l'amylène, l'octylène ou le cyclohexène, ou un arylène comme le styrène ou le méthylstyrène ; les $R_i$ renferment éventuellement un ou plusieurs hétéroatomes,
- Q est un groupe hydrocarboné comportant de 2 à 18 inclus atomes de carbone et éventuellement un ou plusieurs hétéroatomes,
- A est un groupe alkylidène comportant de 1 à 5 inclus atomes de carbone,
- les $R_j$ sont semblables ou différents entre eux et peuvent être choisis parmi:
  - * le groupe A-PO3H2, A ayant la signification précitée,
  - * le groupe alkyle comportant de 1 à 18 inclus atomes de carbone et pouvant porter des groupements [R-O($R_i$-O)n], R et $R_i$ ayant les significations précitées,
  - * et le groupe

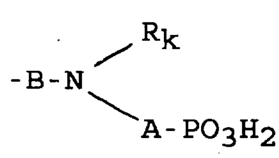

- $R_k$ désignant un groupement tel que $R_j$,
- B désignant un groupement alkylène comportant de 2 à 18 inclus atomes de carbone,

■ "n" est un nombre supérieur à 0,
■ "r" est le nombre des groupes [R-O($R_i$-O)n] portés par l'ensemble des $R_j$,
■ "q" est le nombre des groupes [R-O($R_i$-O)n] portés par Q,
■ la somme "r+q" est comprise entre 1 et 10 inclus,

- "y" est un nombre entier compris entre 1 et 3 inclus,
- Q, N et les $R_j$ peuvent former ensemble un ou plusieurs cycles, ce ou ces cycles pouvant en outre contenir un ou plusieurs autres hétéroatomes.

Les sels des composés (I) peuvent être stoéchiométriques ou non, mixtes ou non, et sont constitués avec des métaux alcalins, des métaux alcalino-terreux, des amines ou des ammoniums quaternaires.

Les composés (I) se présentent sous une forme pouvant varier de la forme liquide à la forme solide, en passant par la forme cireuse.

Ils sont généralement hydrosolubles ou hydrodispersables.

Les composés (I) ainsi que leurs sels, n'ont jamais été décrits dans l'état de la technique à l'exception de ceux, appelés composés (II), pour lesquels, quand on se réfère à la formule des composés (I), on trouve :

* soit que :

. R est l'atome d'hydrogène et n est nul, avec $R_i$, y, r, q, n, $R_j$, A et Q ayant les significations précitées,

* soit que :

. R est un alkyle ayant de 1 à 5 inclus atomes de carbone et
. $R_i$ comporte de 2 à 5 inclus atomes de carbone et
. "y"= 1, "r" = 0, "q" = 1, "n" ≤ 20 et
. $R_j$ = A-PO3H2, A ayant la signification précitée, $R_j$ pouvant être salifié et
. Q comporte de 3 à 5 inclus atomes de carbone,

* soit que :

. R est un atome d'hydrogène et
. $R_i$ est un groupement éthylène et
. "y"= 1, "r" = 0, "q" = 1, "n" = 1 et
. $R_j$ = A-PO3H2, A ayant la signification précitée, $R_j$ pouvant être salifié et
. Q est un groupement éthylène.

Ces composés (II) sont connus en tant qu'inhibiteurs de corrosion (brevet américain n°3.718.603) et en tant qu'inhibiteurs de la formation des dépôts de tartre (brevets américains n°3.976.589 et n°5.069.798).

Dès lors, la présente invention a aussi pour objet les nouveaux composés (III) et leurs sels, lesdits composés (III) correspondent à la famille des composés (I), à l'exception des composés (II). Dès lors, les composés (III) répondent à la formule suivante :

$$[R-O(R_i-O)_n]_{r+q}\ [Q(-N\begin{matrix}/R_j\\ \backslash A-PO_3H_2\end{matrix})_y]$$

dans laquelle :

- R est un atome d'hydrogène ou un groupe hydrocarboné monovalent comportant de 1 à 18 inclus atomes de carbone et éventuellement un ou plusieurs hétéroatomes.
- Les $R_i$ sont semblables ou différents entre eux et représentent un alkylène comme l'éthylène, le propylène, l'amylène, l'octylène ou le cyclohexène ou un arylène comme le styrène ou le méthylstyrène. Les $R_i$ renferment éventuellement un ou plusieurs hétéroatomes ;

- Q est un groupe hydrocarboné comportant de 2 à 18 inclus atomes de carbone et éventuellement un ou plusieurs hétéroatomes ;
- A est un groupement alkylidène comportant de 1 à 5 inclus atomes de carbone ;
- les $R_j$ sont semblables ou différents entre eux et peuvent être choisis parmi :

  * le groupe -A-PO3H2, A ayant la signification précitée,
  * un groupe alkyle comportant de 1 à 18 inclus atomes de carbone et pouvant porter des groupements [R-O($R_i$-O)n], R et $R_i$ ayant les significations précitées,
  * et le groupement :

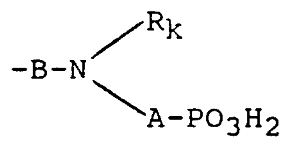

  - $R_k$ désignant un groupement tel que $R_j$,
  - B désignant un groupement alkylène comportant de 2 à 18 atomes de carbone,

- "n" est un nombre supérieur ou égal à 0, mais n est différent de 0 lorsque R est l'atome d'hydrogène,
- "r" est la somme des groupements [R-O($R_i$-O)n] portés par l'ensemble des $R_j$,
- "q" est le nombre des groupements [R-O($R_i$-O)n] portés par Q,
- la somme "r+q" est comprise entre 1 et 10 inclus,
- "y" est un nombre entier compris entre 1 et 3 inclus,
- Q, N et les $R_j$ peuvent former ensemble un ou plusieurs cycles , ce ou ces cycles pouvant en outre contenir un ou plusieurs autres hétéroatomes,

à l'exclusion des composés (I) et de leurs sels pour lesquels :

* soit :

  . R est un alkyle ayant de 1 à 5 inclus atomes de carbone et
  . $R_i$ comporte de 2 à 5 inclus atomes de carbone et
  . "y"= 1, "r" = 0, "q" = 1, "n" $\leq$ 20 et
  . $R_j$ = A-PO3H2, A ayant la signification précitée, $R_j$ pouvant être salifié et
  . Q comporte de 3 à 5 inclus atomes de carbone,

* soit :

  . R est un atome d'hydrogène et
  . Ri est un groupement éthylène et
  . "y"= 1, "r" = 0, "q" = 1, "n" = 1 et
  . $R_j$ = A-PO3H2, A ayant la signification précitée, $R_j$ pouvant être salifié et
  . Q est un groupement éthylène.

De le même façon que les sels des composés (I), les sels des composés (III) peuvent être stoechiométriques ou non, mixtes ou non, et sont constitués avec des métaux alcalins, des métaux alcalino-terreux, des amines ou des ammoniums quaternaires.

## EXPOSE DETAILLE DE L'INVENTION

### Préparation des composés (I)

A l'exclusion des composés (II) dont la préparation est connue, les composés (I) sont, de préférence, préparés à partir d'amino-alcools (A) selon le procédé en plusieurs étapes décrit ci-après.

Par amino-alcool on entend dans le présent exposé un composé comportant au moins une fonction amine primaire ou secondaire et au moins un groupement OH.

Dans une première étape, on prépare un amino-alcoolate (B) de potassium, à partir d'un amino-alcool (A), de façon connue, de préférence par mise en contact avec une base apportant un ou plusieurs cations potassium.

Les amino-alcools (A) pouvant servir de produits de départ répondent avantageusement à la formule suivante :

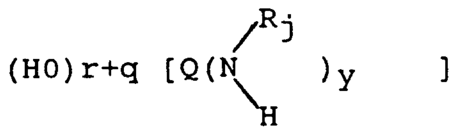

dans laquelle :

- "y" est le nombre de fonctions amines primaires ou secondaires qui sont identiques ou différentes les unes des autres et "y" est compris entre 1 et 3 inclus,
- "r" est le nombre des OH portés par l'ensemble des $R_j$,
- "q" est le nombre des OH portés par Q,
- "r+q" est compris entre 1 et 10 inclus,
- Q représente un groupe hydrocarboné comportant de 2 à 18 inclus atomes de carbone, et éventuellement un ou plusieurs hétéroatomes,
- chaque $R_j$ est un atome d'hydrogène ou un radical alkyle comportant de 1 à 18 inclus atomes de carbone, ou un groupe du type

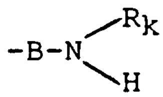

dans lequel $R_k$ désigne un groupe tel que $R_j$ et B désigne un groupe alkylène comportant de 2 à 18 inclus atomes de carbone.
- Q, N et les $R_j$ peuvent former ensemble un ou plusieurs cycles, ce ou ces cycles pouvant en outre contenir un ou plusieurs autres hétéroatomes.
- Q et les $R_j$ doivent être dépourvus de groupements susceptibles de réagir entre eux ou avec d'autres groupements portés par l'amino-alcool (A) ou l'amino-alcoolate (B) dans les conditions réactionnelles du procédé décrit plus haut.

Parmi les amino-alcools (A), on peut citer, à titre d'exemple, les composés couramment utilisés suivants :

- l'éthanol-amine, la diéthanol-amine, les propanol-amines, la N-méthyléthanol-amine, l'amino-4-cyclohexanol, le diamino-propanol-2, la N-décyléthanolamine, la 1-(2-hydroxyéthyl)pipérazine, ou les composés répondant aux formules : $HO-C_2H_4-NH-C_2H_4-NH_2$ ou $H0-C_2H_4-(NH-C_2H_4)_n-NH_2$.

La base utilisée est de préférence le diphénylméthyl-potassium, l'hydrure de potassium, l'amidure de potassium ou le potassium finement divisé. De telles bases présentent l'avantage de transformer quantitativement les fonctions alcools en fonctions alcoolates à température modérée, par exemple à 30°C.

L'emploi de telles bases permet en outre de préparer l'amino-alcoolate (B) dans un solvant dans lequel les étapes qui suivent peuvent être conduites.

Des bases telles que l'hydroxyde de potassium ou les alcoolates de potassium peuvent également être utilisées. Mais dans ce cas, la réaction de formation de l'amino-alcoolate présente quelques inconvénients :

- cette réaction est équilibrée,
- cette réaction conduit à la formation d'eau ou d'alcool léger qu'il est nécessaire d'éliminer du mélange réactionnel, par exemple par évaporation, avant d'entre-prendre les étapes suivantes.

Dans une seconde étape, on fait réagir l'amino-alcoolate obtenu précédemment avec un oxiranne correspondant à $R_iO$ ou plusieurs oxirannes simultanément ou successivement, dans un solvant aprotique et anhydre, sous atmosphère anhydre et à température comprise entre 0°C et 200°C, de façon à fixer sur chaque atome d'oxygène provenant d'une fonction alcoolate, une série de "n" motifs $R_iO$ semblables ou différents. Les oxirannes correspondant à $R_iO$ peu-

vent être choisis dans le groupe constitué par l'oxyde d'éthylène, l'oxyde de propylène, l'oxyde de butylène, l'oxyde d'amylène, l'oxyde d'octylène, l'oxyde de styrène, l'oxyde de méthylstyrène, l'oxyde de cyclohexane, leurs divers dérivés substitués et leurs mélanges.

La quantité d'oxiranne mise en oeuvre est fonction de la longueur "n" des chaînes désirée et du nombre de groupements OH de l'amino-alcool (A) de départ.

L'oxiranne peut être introduit progressivement dans le milieu réactionnel. On peut ainsi contrôler le degré de polyoxyalkylation, ce qui offre l'avantage de pouvoir faire varier le caractère hydrophile ou hydrophobe de la molécule. Il suffit en effet d'interrompre l'addition d'oxiranne dès que la longueur moyenne de chaînes polyoxyalkylées souhaitée est atteinte.

L'addition de l'oxiranne est conduite dans un solvant dépourvu d'hydrogène acide dans les conditions opératoires, ceci afin de ne pas régénérer les fonctions alcools.

Le solvant est choisi de préférence parmi les solvants à forte polarité afin de faciliter la dissociation des cations potassium des fonctions alcoolates. Les solvants convenant particulièrement bien sont le tétrahydrofuranne, le diglyme (diéthylène glycol diméthyl éther), le diméthylsulfoxyde ou l'hexaméthylphosphoramide.

La réaction d'addition de l'oxiranne doit être effectuée sous atmosphère anhydre afin d'éviter l'introduction d'eau dans le milieu réactionnel, ce qui régénérerait les fonctions alcools et perturberait donc la polyaddition. On peut pour cela travailler sous azote, sous argon ou sous tout autre gaz inerte vis-à-vis du milieu réactionnel.

La température réactionnelle de cette seconde étape est généralement comprise entre 0°C et 200°C suivant le solvant utilisé et de préférence entre 20°C et 120°C.

Les durées et les pressions réactionnelles sont connues de l'homme du métier et sont fonction du mode opératoire suivi.

Dans une troisième étape, on neutralise ou fonctionnalise le produit obtenu précédemment de façon connue en soi, en fixant sur chaque atome d'oxygène terminant une chaîne polyoxyalkylée, un atome d'hydrogène ou un radical alkyle.

On peut ainsi acidifier le milieu réactionnel pour fixer un proton ou ajouter un agent d'alkylation tel que le diméthylsulfate ou l'iodure de méthyle pour réaliser une alkylation. L'agent employé pour effectuer cette fonctionnalisation doit toutefois être choisi en tenant compte de la présence des fonctions amines, afin de ne pas les affecter.

Après évaporation du solvant et de l'eau, on obtient une amine polyoxyalkylée que l'on fonctionnalise alors dans une quatrième étape suivant la réaction de Mannich décrite notamment dans le Journal of Organic Chemistry (Vol 31, 1603-07, 1966), ou suivant le brevet français n°1 342 412 ou le brevet américain n°3.567.768.

Au cours de ladite quatrième étape, il est recommandé, pour éviter la dégradation de la ou des chaînes polyoxyalkylées, de travailler avec des proportions proches de la stoechiométrie en acide et en formol, et de réaliser l'introduction du formol dans le milieu réactionnel avec lenteur.

A l'issue de la réaction de Mannich, les composés sont en pratique obtenus sous la forme d'ammonium. Ils peuvent être utilisés sous cette forme ou être neutralisés de façon à faire disparaître le caractère acide.

Les sels de ces composés sont préparés de façon connue en soi, par neutralisation totale ou partielle avec une base ou un mélange de bases appropriées.

Parmi les composés (I) on peut citer ceux représentés par les formules

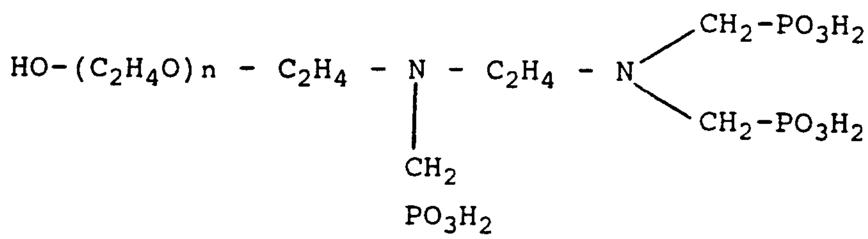

(R = H, Ri = $C_2H_4$, Q = $C_2H_4$, A = $CH_2$, Rj = $CH_2CH_2$ $N[CH_2\text{-}PO_3H_2]_2$) et

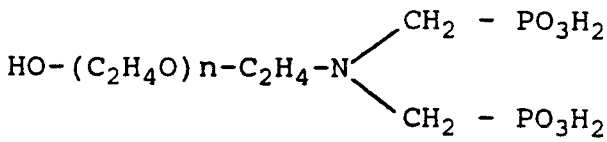

**Utilisation des composés (I)**

Comme précisé ci-dessus, les composés (I) et leurs sels procurent une effet fluidifiant aussi bien à des suspensions aqueuses de particules minérales ne conduisant pas à une prise hydraulique qu'à des pâtes de liant hydraulique.

Par suspension aqueuse de particules minérales, on entend dans le présent exposé une suspension aqueuse renfermant des particules sans prise hydraulique comme les charges calciques, telles que par exemple le carbonate de calcium ou le sulfate de calcium dihydraté, la chaux éteinte ou le fluorure de calcium ; des oxydes ou minéraux tels que par exemple l'oxyde de chrome, la silice, les alumines ou l'oxyde de fer ; d'autres charges minérales comme des silicates tels que le mica, etc. Par pâtes de liant hydraulique, on entend des pâtes comprenant notamment des ciments tels que les ciments Portland ou les ciments alumineux, des plâtres tels que des plâtres $\alpha$ ou $\beta$, de la chaux vive, des phases pures des ciments C3S, C4AF, C3A, C12A7, CA, C2A ou des mélanges de ces pâtes. Les suspensions aqueuses de particules minérales et les pâtes de liant hydraulique concernées par l'invention peuvent éventuellement contenir divers additifs.

A titre d'exemple d'additifs, on peut citer les agents de stabilisation des suspensions comme les éthers de cellulose ou les gommes de xanthane, les silicates alcalins pour les bétons projetés, les accélérateurs et les retardateurs de prise et de durcissement.

Selon l'invention, on utilise de préférence les composés (I) ou leurs sels pour lesquels R est un atome d'hydrogène, un groupe méthyle, éthyle, nonylphénol, ou un groupe hydrocarboné saturé ou non et comportant de 12 à 18 atomes de carbone. De préférence encore, R est un atome d'hydrogène.

Les groupes $R_i$ sont de manière préférentielle choisis parmi l'éthylène et le propylène. Il est encore plus souhaitable que les groupes $R_i$ soient majoritairement, voire uniquement, de l'éthylène, et en nombre suffisant pour conserver le caractère hydrosoluble ou hydrodispersable des composés (I) ou de leurs sels.

Le groupe Q est déterminé par le choix de l'amino-alcool (A) de départ. De préférence, il comporte de 2 à 12 (inclus) atomes de carbone, et de préférence encore, il comporte de 2 à 6 (inclus) atomes de carbone. Avantageusement, Q est choisi parmi l'éthylène, le cyclohexène ou le n-hexène.

Le groupe alkylidène A qui est porteur d'un atome de carbone divalent comporte de préférence de 1 à 3 (inclus) atomes de carbone. Il est particulièrement avantageux que A soit le groupe méthylène.

Le groupe $R_j$, qui est éventuellement salifié, est choisi de préférence parmi les groupes $-CH_2-PO_3H_2$, méthyle et $C_2H_4N(CH_2PO_3H_2)_2$. De préférence encore $R_j$ représente le groupe $-CH_2-PO_3H_2$.

Il est souhaitable que "n" soit compris entre 1 et 10 000 inclus. On préfère en particulier les valeurs de "n" comprises entre 1 et 500 inclus. Dans l'idéal, on choisit pour "n" une valeur comprise entre 1 et 250 inclus.

La somme "r + q" correspond au nombre total de chaînes polyoxyalkylées. De préférence, cette somme est inférieure à 3. De préférence encore, elle est égale à 1.

"y" est un nombre compris entre 1 et 3 inclus. Il est de préférence égal à 1 quand le fluidifiant est destiné à des pâtes de liants hydrauliques classiques avec lesquelles les retards de prise ne sont pas recherchés.

De même, mais pour des raisons économiques dans ce cas, "y" sera de préférence choisi égal à 1 pour un fluidifiant destiné à des suspensions aqueuses de particules minérales sans prise hydraulique.

En revanche, dans les compositions de liants hydrauliques pour lesquelles on recherche un retard de prise, telles que par exemple les compositions de ciment de forage, "y" sera de préférence choisi égal ou supérieur à 1.

Les sels des composés (I) sont de préférence des sels de sodium, de calcium ou de diéthanolamine.

L'utilisation selon l'invention des composés (I) ou de leurs sels rend possible l'obtention de compositions aqueuses de particules minérales très fluides quoique très chargées.

L'un des avantages majeurs des composés (I) ou de leurs sels réside dans le fait qu'ils procurent un effet fluidifiant notable à l'égard d'une grande diversité de charges, sous réserve toutefois que ces charges ne présentent pas, superficiellement au moins, un caractère hydrophobe résultant généralement d'un traitement. Ainsi, les fluidifiants de l'invention sont particulièrement efficaces dans les compositions aqueuses de charges minérales sans prise hydraulique, comme par exemple les charges calciques telles que le carbonate de calcium le sulfate de calcium dihydraté, la chaux éteinte ou le fluorure de calcium ; les oxydes minéraux tels que le dioxyde de titane, l'oxyde ferrique, l'oxyde de chrome, la silice ou les alumines, ou d'autres charges telles que les silicates comme par exemple le mica, etc.

Dans ces compositions aqueuses de charges minérales sans prise hydraulique, contenant éventuellement divers additifs connus de l'homme de métier, les fluidifiants de l'invention peuvent y être incorporés dans une proportion comprise entre 0,01 % et 25°% inclus, de préférence inférieure à 5°% suivant la fluidité recherchée, le pourcentage étant exprimé en masse de fluidifiant sec par rapport à la masse de minéral sec.

Les composés (I) ou leurs sels en tant que fluidifiants sont également d'une grande efficacité à l'égard des pâtes cimentières composées d'un ou de plusieurs liants hydrauliques, d'eau et de divers additifs et charges connus de l'homme du métier.

De plus, on a constaté avec étonnement que la fluidité élevée obtenue au moyen des composés (I) ou de leurs sels se maintient dans le temps pendant une durée supérieure à celle qui est observée avec les fluidifiants connus jusqu'à ce jour. Les composés (I) ou leurs sels peuvent donc être utilisés comme agents de maintien de la fluidité, par exemple,

en combinaison avec d'autres additifs, en particulier d'autres fluidifiants, ou en les introduisant dans des suspensions de liant(s) hydraulique(s) déjà fluides.

Toutefois, on a observé que sous certaines conditions, les composés (I) ou leurs sels peuvent être à l'origine d'un effet de retard de la prise, cet effet supplémentaire pouvant être souhaitable dans des applications spécifiques comme celles des ciments suffisamment fluides pour être pompables et transportables, tels que les ciments de forage, ou au contraire indésirable dans les compositions cimentières plus classiques.

Avantageusement, les composés (I) ou leurs sels présentent un effet modulable de retard de la prise des liants hydrauliques, qui, selon le cas, pourra être très limité, voire indécelable, et qui, dans d'autres cas au contraire, garantira une maniabilité pendant un temps prolongé.

C'est pourquoi, on recommande pour obtenir un effet de retard de la prise de retenir les composés (I) ou leurs sels vérifiant au moins l'une des deux conditions ($a_1$) ou ($b_1$) suivantes :

($a_1$) "y" est supérieur à 1,
($b_1$) "y" est égal à 1 et Rj comprend au moins une fonction phosphonique ou phosphonate.

De préférence encore, on recommendera en outre, pour aboutir à un retard de prise, de retenir l'une et/ou l'autre des conditions suivantes :

($c_1$) "n" est inférieur ou égal à 100,
($d_1$) une proportion de composés (I) ou de leurs sels d'autant plus importante que l'une des conditions ($a_1$), ($b_1$) et ($c_1$) n'est pas vérifiée.

L'effet retard des composés (I) ou de leurs sels vérifiant au moins l'une des conditions ($a_1$), ($b_1$), ($c_1$) ou ($d_1$), et de préférence l'ensemble de ces conditions, peut donc être mis avantageusement à profit, aux dépens de l'utilisation d'autres retardateurs de prise. De préférence encore, on choisit les composés (I) ou leurs sels vérifiant les conditions ($a_1$) et ($c_1$), avec au moins deux fonctions phosphoniques ou phosphonates, dès que l'on recherche un retard de la prise.

En revanche, les fluidifiants de l'invention, qui sont incorporés à des pâtes cimentières dites classiques, composées d'un ou de plusieurs liants hydrauliques, d'eau et de divers additifs et charges connus de l'homme de métier, et dans lesquelles il n'est pas souhaitable de retarder la prise, seront de préférence choisis parmi les composés (I) ou leurs sels vérifiant les deux conditions suivantes :

($a_2$) "y" est égal à 1 ;
($b_2$) "n" est supérieur ou égal à 100.

En outre, les composés (I) ou leurs sels conduiront d'autant mieux à la fluidité et aux résistances mécaniques finales recherchées, qu'ils seront porteurs de deux fonctions phosphoniques et/ou phosphonates.

Dans les pâtes cimentières dites classiques, les composés (I) ou leurs sels peuvent être incorporés dans une proportion comprise entre 0,01 % et 25 % inclus, de préférence inférieure à 5 %, le pourcentage étant exprimé en masse d'additif sec par rapport à la masse de liant contenue dans les pâtes cimentières.

Bien entendu, il est aussi possible de mettre en oeuvre un mélange de composés (I) ou de leurs sels à chaîne courte ($n < 50$) et de composés à chaîne polyoxyalkylée longue ($n > 50$) de façon à obtenir les effets optima en terme de fluidité et de retard de prise. Un tel mélange peut permettre, en outre, de mettre en solution ou en dispersion des composés (I) ou des sels des composés (I) qui seraient insuffisamment solubles ou insuffisamment dispersables dans l'eau, par exemple parce que leur chaîne polyoxyalkylée est trop courte ou le groupement Q trop important.

Il va de soi que la mise en oeuvre des composés (I) ou de leurs sels ne s'oppose pas à l'emploi simultané d'autres additifs connus.

D'autres avantages et buts de l'invention apparaîtront plus clairement à la lecture des exemples donnés ci-après dans un but illustratif et non limitatif.

**<u>EXEMPLES</u>**

Les exemples 1 et 2 concernant la préparation des composés (I).

Les exemples 3 à 5 ont trait aux évolutions de la viscosité de suspensions aqueuses de $CaCO_3$ en fonction de divers paramètres tels que la nature de l'additif, la quantité d'additif ajoutée ou la longueur des chaînes polyoxyalkylées. La charge faisant l'objet de ces tests est du $CaCO_3$ commercialisé par SOLVAY et possédant une grande surface spécifique, de l'ordre de 22 $m^2/g$. Des essais similaires aux exemples 3 à 5, réalisés sur du $CaCO_3$ de plus faible surface spécifique (environ 0,6 $m^2/g$) ont également permis d'établir l'efficacité des additifs testés.

Les exemples 6 à 11 illustrent l'utilisation selon l'invention des composés (I) comme fluidifiants pour liants hydrauliques.

Les exemples 12, 13, 15 et 16 illustrent le pouvoir fluidifiant des composés (I) selon l'invention à l'égard de diverses charges minérales.

L'exemple 14 montre l'insensibilité des composés de l'invention en présence de sels.

L'exemple 17 illustre l'effet de retard de la prise qu'entraine l'utilisation de certains composés (I).

**EXEMPLE 1**

a) Synthèse du composé répondant à la formule :

$$\underset{(b1)}{HO} - \underset{(a1)}{(CH_2CH_2O)_{50}} - \underset{(a2)\ (c)}{CH_2CH_2} - \underset{(b2)}{NH_2}$$

Dans un réacteur en verre parfaitement anhydre, on introduit sous argon 500 $cm^3$ de tétrahydrofuranne anhydre et 1,22 g d'éthanol-amine (0,02 mole). Une solution de diphénylméthylpotassium, soit 21,2 $cm^3$ d'une solution titrée exactement à 0,95 mole/l (0,02 mole), est ajoutée goutte à goutte sous argon jusqu'à obtention d'une coloration persistante orange-brun du milieu. Il y a précipitation partielle de l'amino-alcoolate de potassium.

Les entrées et les sorties d'argon étant maintenues fermées, l'oxyde d'éthylène, soit 51 $cm^3$ (1 mole à 20°C), est introduit sous forme liquide, puis le réacteur est porté à 30°C. Le réacteur est alors en surpression d'environ 0,2 bar et le mélange est maintenu agité à 30°C pendant 12 heures. Au terme de la réaction, le mélange prend une couleur cuivre. Il est acidifié par une solution de méthanol acide à 2 % en acide chlorhydrique.

La neutralisation est atteinte lorsque le milieu se décolore en jaune clair. On élimine le chlorure de potassium par filtration ; le tétrahydrofuranne (THF) est évaporé sous vide et le résidu est versé dans un mélange constitué de 800 $cm^3$ d'eau et 800 $cm^3$ d'éther.

La phase aqueuse contient le polymère aminé spécifiquement polyoxyéthylé sur l'oxygène de la fonction alcool, dont 45 g sont isolés après évaporation totale de l'eau sous vide.

Par RMN $^1H$ (résonance magnétique nucléaire du proton) dans le chloroforme deutérié, on trouve les pics suivants :

- un multiplet à 3,64 ppm correspondant aux 202H désignés par a1 et a2,
- un singulet à 3,05 ppm correspondant aux 3H désignés par b1 et b2,
- un triplet à 2,70 ppm correspondant aux 2H désignés par c.

L'absence de polymère produit par condensation de l'oxyde d'éthylène sur la fonction amine est démontrée par l'absence de singulet à 2,35 ppm qui correspondrait à la présence d'un méthyle sur un azote secondaire. La chromatographie par perméation de gel (GPC) dans l'eau fournit un chromatogramme (préalablement étalonné par une gamme de polyoxyéthylène étalon) dont le maximum est situé à Mw = 2 300 g/mole, en accord avec la masse attendue.

b) Synthèse du composé diphosphoné répondant à la formule :

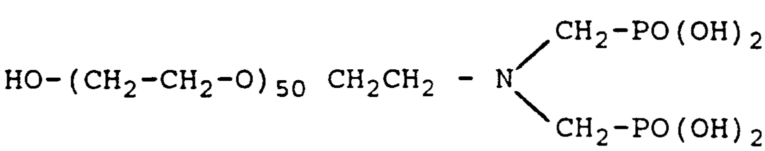

Dans un tricol d'un litre équipé d'un réfrigérant, on introduit 226 g (0,1 mole) du composé obtenu à l'issue de l'étape a), 16,4 g (0,2 mole) d'acide phosphoreux cristallisé et 12 g (0,11 mole) d'acide chlorhydrique en solution aqueuse à 35%.

Le mélange est chauffé sous agitation jusqu'à 100°C, puis on introduit en cinq heures, 17,8 g (0,22 mole) d'une solution aqueuse de formaldéhyde à 37%, et on chauffe à reflux pendant dix-sept heures.

Le milieu réactionnel est ensuite versé dans 900 $cm^3$ d'eau froide, et la teneur en matière sèche est ajustée à 30% par dilution.

L'analyse du spectre de résonance magnétique nucléaire du proton (RNM) indique la présence d'un doublet à 3,55 ppm correspondant à 4 atomes d'hydrogène ($N-CH_2-P$), d'un triplet à 3,7 ppm correspondant à 2 atomes d'hydrogène ($CH_2-N$), et d'un multiplet à 3,64 ppm correspondant à 202 atomes d'hydrogène.

**EXEMPLE 2**

Le composé répondant à la formule :

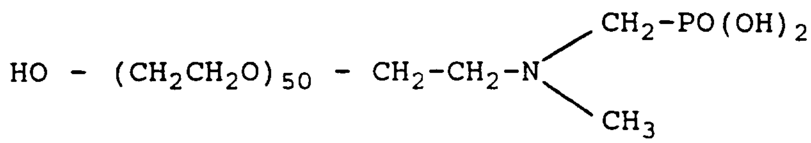

a été préparé selon le mode opératoire décrit dans l'exemple 1, à partir de 0,1 mole de N-méthyléthanolamine, de 0,1 mole de diphénylméthylpotassium et de 5 moles d'oxyde d'éthylène.

a) Le spectre RMN 1H du produit intermédiaire, c'est-à-dire de l'amine polyoxyéthylée obtenue avant la réaction de Mannich, (résonance magnétique nucléaire du proton) dans le chloroforme deutérié comporte : 1 singulet à 2,4 ppm ($N-CH_3$)(3H) ; 1 triplet à 2,7 ppm ($N-CH_2$) (2H) ; 1 singulet à 3,64 ppm ($(CH_2CH_2O)n$) (202H) et 1 singulet à 3,1 ppm (N-H et O-H) (2H).

L'absence de polymère produit par condensation de l'oxyde d'éthylène sur la fonction amine est démontrée par l'absence de singulet à 2,3 ppm qui correspondrait à la présence d'un méthyle sur un azote tertiaire. La chromatographie par perméation de gel (GPC) dans l'eau fournit un chromatogramme (préalablement étalonné par une gamme de polyoxyéthylène étalon) dont le maximum est situé à Mw = 2 350 g/mole, en accord avec la masse attendue.

b) Ce produit intermédiaire a été fonctionnalisé suivant la partie b) de l'exemple 1.

**EXEMPLE 3**

**Evolution de la viscosité en fonction de la quantité d'additif ajouté et du nombre de fonctions phosphoniques.**

Des mesures de viscosité de suspensions contenant 80 g d'eau, 20 g de $CaCO_3$ à grande surface spécifique : 22 $m^2/g$ commercialisé par SOLVAY sous la référence SOCAL 31, et des quantités variables de fluidifiant à tester ont été effectuées.

Les composés testés, préparés conformément à l'exemple 1 ou à l'exemple 2 sont les suivants :

* le composé (a), utilisé à titre de comparaison, (ne répondant pas à la formule (I) )

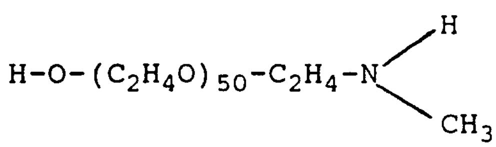

* le composé (b) de formule

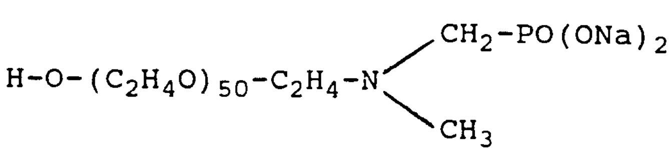

* le composé (c) de formule

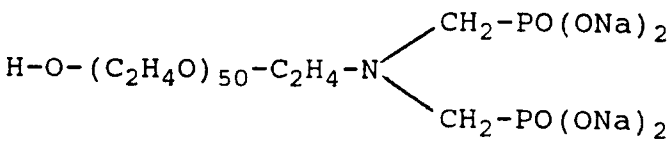

La figure 1 montre 3 courbes représentant l'évolution de la viscosité de la suspension (exprimée en mPa.s), obtenue avec un taux de cisaillement de 1 708 $s^{-1}$, en fonction de la quantité d'additif (composé a, b ou c) introduit dans la suspension.

Comme on peut le constater, les composés (b) et (c) entraînent une importante diminution de la viscosité de la suspension, et ceci dès les faibles teneurs en additif.

Cette diminution est particulièrement importante lorsque cet additif présente une extrémité diphosphonée (additif c).

Au-delà d'une certaine proportion qui est fonction de la longueur et de la nature de la chaîne polyoxyalkylée, des additions supplémentaires des fluidifiants (b) ou (c) n'apportent pas une augmentation appréciable de la fluidité : on constate, en effet, qu'au-delà d'une certaine proportion de fluidifiant (b) et (c), la fluidité reste quasiment constante et que le niveau de fluidité atteint dépend de la nature du fluidifiant introduit.

**EXEMPLE 4**

**Evolution de la viscosité en fonction de la quantité d'additif ajouté et de la longueur des chaînes polyoxyalkylées.**

Des mesures de viscosité ont été effectuées avec trois composés répondant à la formule (I), différant uniquement par la longueur de leur chaîne polyoxyéthylée :

* un composé d(n=1) de formule

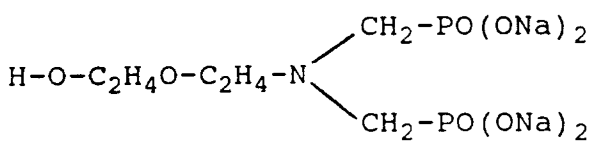

* un composé e(n=10) de formule :

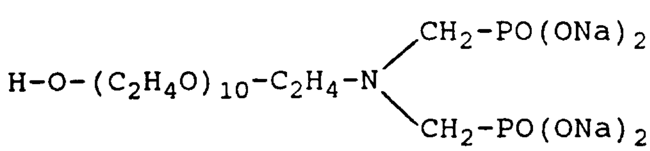

* un composé f(n=50) de formule :

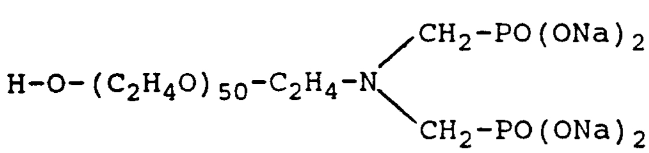

Les suspensions testées contenaient 80 g d'eau, 20 g de $CaCO_3$ et des quantités variables d'additif (composé d, e ou f). La figure 2 montre trois courbes représentant l'évolution de la viscosité (en mPa.s), à un taux de cisaillement de 1 708 $s^{-1}$, en fonction de la quantité de fluidifiant introduit.

Au-delà d'une certaine quantité d'additif ajouté, apparaît un palier, la viscosité ne variant dès lors pratiquement plus.

En outre, on remarque que plus la longueur de la chaîne polyoxyéthylée est élevée, plus le pouvoir fluidifiant est élevé.

Toutefois, l'accroissement du pouvoir fluidifiant n'est pas illimité. En effet, au-delà d'une certaine valeur de "n", le pouvoir fluidifiant se stabilise, comme expliqué dans l'exemple suivant.

**EXEMPLE 5**

**Evolution de la viscosité uniquement en fonction de la longueur des chaînes polyoxyalkylées.**

Plusieurs suspensions ont été réalisées avec 80 g d'eau, 20 g de $CaCO_3$ et à chaque fois la même quantité de fluidifiant à tester, en l'occurence 0,24 g (soit 1,2 % en poids rapporté à la quantité de $CaCO_3$).

Des composés répondant à la formule (I) préparés selon l'exemple 1 à partir d'éthanol-amine et ne différant que par la longueur de leur chaîne polyoxyalkylée ont été testés.

La quantité de composé présent dans la suspension a été choisie de façon à atteindre une viscosité quasiment constante malgré un ajout supplémentaire du composé se concrétisant par un palier sur les courbes de viscosité en fonction de la quantité de fluidifiant.

La courbe 3 illustre l'évolution de la viscosité correspondant à ce palier en fonction du nombre "n".

Il apparaît donc, que pour ce minéral, qu'au-delà d'une valeur de "n" voisine de 20, la viscosité devient quasi-constante.

Toutefois, ceci n'est vrai que dans le cas où les particules minérales en suspension sont de taille voisine ou en d'autres termes correspondent à une coupe granulométrique étroite.

**EXEMPLE 6**

Les composés C1 à C10 répondant à la formule (F) donnée ci-dessous ont été synthétisés conformément à l'exemple 1 ou à l'exemple 2 à partir des amino-alcools primaires ou secondaires correspondants, puis neutralisés de façon connue (bien entendu lorsque M = H , le composé se présente sous la forme d'ammonium). Leurs caractéristiques structurelles sont données dans le tableau (I) ci-après.

**Formule (F)**

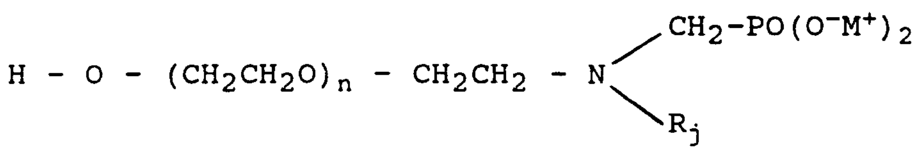

TABLEAU (I)

| Produits | n | M+ | $R_j$ |
|---|---|---|---|
| C1 | 10 | $H^+$ | $CH_3$ |
| C2 | 10 | $H^+$ | $-CH_2-PO(OM)_2$ |
| C3 | 50 | $H^+$ | CH3 |
| C4 | 100 | $H^+$ | CH3 |
| C5 | 100 | $H^+$ | $-CH_2-PO(OM)_2$ |
| C6 | 100 | $Na^+$ | $-CH_2-PO(OM)_2$ |
| C7 | 100 | $Ca^+$ | $-CH_2-PO(OM)_2$ |
| C8 | 100 | $DEAH^+$ * | $-CH_2-PO(OM)_2$ |
| C9 | 170 | $H^+$ | $-CH_2-PO(OM)_2$ |
| C10 | 1 | $H^+$ | $-CH_2-PO(OM)_2$ |

* $DEAH^+$ représente le cation $(HOC_2H_4)_2\ NH_2^+$

## EXEMPLE 7

Les pouvoirs fluidifiants des composés obtenus dans l'exemple 6 ont été évalués au travers des réductions d'eau qu'ils ont occasionnées lors de la préparation d'échantillons de même plasticité.

Les échantillons testés sont composés :

1) de mortier normalisé, c'est-à-dire de 450 g de ciment HP du Havre et de 1 350 g de sable AFNOR (0-2 mm) ;
2) de 0,3 % en masse (1,35 g) du fluidifiant testé par rapport au poids de ciment (sauf lorsqu'il s'agit de l'échantillon témoin) ;
3) de la quantité "x" d'eau (exprimée en g) nécessaire pour que l'échantillon ait la plasticité de référence.

La plasticité de référence choisie est celle obtenue lorsque l'échantillon témoin contient 225 g d'eau.

La réduction d'eau est la valeur, (225-x)/225. La maniabilité de l'échantillon a été mesurée au maniabilimètre à mortier, conformément à la norme NF p 18-452.

Les résultats obtenus sont rassemblés dans le tableau (II) ci-après :

TABLEAU (II)

| COMPOSES | MANIABILITE en s | REDUCTION D'EAU en % |
|---|---|---|
| C2 (diphosphoné) | 1,4 | 28 |
| C5 (diphosphoné) | 1,4 | 21 |
| C1 (monophosphoné) | 1,9 | 12 |
| C3 (monophosphoné) | 1,9 | 14 |
| C4 (monophosphoné) | 1,9 | 12 |
| Témoin | 1,7 | 0 |

On observe donc une réduction d'eau particulièrement élevée lorsque le composé testé est diphosphoné.

**EXEMPLE 8**

Il a été effectué une comparaison des pouvoirs fluidifiants et des résistances mécaniques induites par les composés (I) avec les performances résultant de l'utilisation d'un fluidifiant du commerce.

Le fluidifiant du commerce choisi est la résine GT commercialisée par la société CHRYSO. Il s'agit d'un polysulfonate à base de mélamine. La résine GT est dosée en extrait sec équivalent.

Les mesures de réduction d'eau et de maniabilité ont été effectuées comme dans l'exemple 7, à la différence près que les échantillons ne contenaient que 0,24 % de fluidifiant.

Les mesures de résistance mécanique ont été effectuées conformément à la norme EN 196.

Les résultats ont été rassemblés dans le tableau (III) suivant :

TABLEAU (III)

| COMPOSES | MANIABILITE (en s) | REDUCTION D'EAU (en %) | RESISTANCES EN COMPRESSION (en MPa) après | | |
|---|---|---|---|---|---|
| | | | 1j | 7j | 28j |
| Témoin | 4,0 | 0 | 20 | 54 | 67 |
| Résine GT | 4,1 | 7 | 24 | 60 | 70 |
| C5(diphosphoné) | 3,6 | 20 | 24 | 67 | 80 |
| C9 (diphosphoné) | 3,7 | 17 | 24 | 62 | 74 |

**EXEMPLE 9**

Afin de déterminer l'influence de la nature du cation $M^+$ de la formule (F), des mesures de réduction d'eau, de maniabilité et de résistance en compression ont été effectuées, comme dans l'exemple 7, avec plusieurs composés ne différant entre eux que par la nature du cation $M^+$.

Le tableau (IV) suivant rassemble les résultats obtenus :

TABLEAU (IV)

| COMPOSE | DOSAGE | MANIABILITE (en s) | M+ | REDUCTION D'EAU (en %) | RESISTANCES EN COMPRESSION (en MPa) après | | |
|---|---|---|---|---|---|---|---|
| | | | | | 1j | 7j | 28j |
| C5 | 0,24 % | 3,6 | $H^+$ | 16 | 20 | 66 | 76 |
| C6 | 0,24 % | 4,5 | $Na^+$ | 17 | 20 | 63 | 76 |
| C7 | 0,24 % | 3,3 | $Ca^+$ | 19 | 20 | 62 | 77 |
| C8 | 0,24 % | 3,3 | $DEAH^+$ | 18 | 20 | 64 | 86 |
| Témoin | 0,24 % | 4,0 | / | 0 | 17 | 47 | 70 |

On observe donc des propriétés mécaniques très élevées lorsque $M^+$ est le cation DEAH+ $(HOC_2H_4)_2NH_2^+$.

**EXEMPLE 10**

Le pouvoir fluidifiant ainsi que les résistances mécaniques induites par les composés (I) lors de leur utilisation selon l'invention, ont été comparés avec ceux obtenus avec la résine GT définie dans l'exemple 8.

Les échantillons testés sont formés d'un mélange composé de :

- béton comprenant :

. 690 kg de gravier 10/20 mm roulé
. 530 kg de gravier 4/10 mm roulé
. 100 kg de gravier 1/4 mm roulé
. 434 kg de gravier 0/1 mm roulé
. 350 kg de ciment HP du Havre

- 0,24 % en masse de fluidifiant par rapport au poids de ciment, à l'exception de l'échantillon témoin qui ne comprend pas de fluidifiant,
- et la quantité "x" d'eau (exprimée ici en kg) nécessaire pour que l'échantillon ait la plasticité de référence, définie ici comme étant celle d'un échantillon témoin contenant 183,7 kg d'eau.

La réduction d'eau a été calculée comme dans l'exemple 7.

La fluidité a été mesurée directement, c'est-à-dire en mesurant le "slump" selon la norme NF P-18-333.

La résistance en compression a été mesurée selon la norme EN 196.

Les résultats obtenus sont regroupés dans le tableau (V) suivant :

TABLEAU (V)

| FLUIDIFIANT | SLUMP | REDUCTION D'EAU (en %) | RESISTANCE EN COMPRESSION (en MPa) après | | |
|---|---|---|---|---|---|
| | | | 1j | 7j | 28j |
| Résine GT | 5 | 4 | 22 | 40 | 46 |
| C5 | 7 | 13 | 27 | 47 | 56 |
| C9 | 7 | 13 | 22 | 40 | 53 |
| Témoin | 7 | 0 | 21 | 38 | 44 |

Comme on peut le constater, les composés C5 et C9 entraînent à la fois une meilleure réduction d'eau et de meilleures propriétés mécaniques que celles obtenues avec la résine GT.

La maniabilité pendant un temps prolongé des fluidifiants C5, C9 et de la résine a été évaluée sur une composition de béton comprenant :

- 605 kg de gravier 10/20 mm concassé,
- 515 kg de gravier 4/10 mm concassé,
- 165 kg de gravier 1/4 mm concassé,
- 340 kg de gravier 0/1 mm concassé,
- 175 kg de gravier 0/0,5 mm concassé,
- 350 kg de ciment CPA HP de Cormeilles,
- une quantité d'eau nécessaire pour que l'échantillon ait la plasticité de référence définie ici comme étant celle d'un échantillon témoin contenant 166,7 litres.

Le slump a été mesuré selon la norme NF P-18-333. Les résultats obtenus sont regroupés dans le tableau (VI) suivant :

TABLEAU (VI)

| | | SLUMP | | | | | RC (3) en Mpa |
|---|---|---|---|---|---|---|---|
| FLUIDIFIANT | DOSAGE (1) en % | T° | T° + 30 mn | $T_F$ (2) | $T_F$ + 30 mm | $T_F$ + 60 mm | |
| Résine GT | 0,24 | 3 | 2 | 18 | 7 | - | 23,7 |
| C5 | 0,180 | 4 | 3 | 18 | 16 | 14 | 21,7 |
| C9 | 0,195 | 4 | 3 | 17 | 14 | 10 | 21,6 |

(1) il est rapporté à la quantité de ciment,
(2) le fluidifiant est ajouté à $T_F$ = T° + 30 mn,

(3) résistance en compression à 24 h selon la norme NF P-18406.

Grâce aux fluidifiants C5 et C9, on accroît le temps de travail du béton car le slump ne diminue que très lentement par rapport à ce que l'on observe avec les fluidifiants du commerce.

**EXEMPLE 11**

Dans cet exemple, on a mesuré les réductions d'eau, les résistances à la compression ainsi que la résistance à la flexion, selon la norme EN 196, engendrées par les composés C1 et C10 dans un mortier normalisé (défini à l'exemple 7).

Le tableau (VII) suivant rassemble les résultats obtenus :

TABLEAU (VII)

| COMPOSES | DOSAGE | MANIABILITE (en s) | REDUCTION D'EAU (en %) | RESISTANCE EN COMPRESSION (en MPa) | | RESISTANCE A LA FLEXION (en MPa) | |
|---|---|---|---|---|---|---|---|
| | | | | 7j | 28j | 7j | 28j |
| Témoin | | 4,2 | 0 | 46,3 | 68,3 | 11,2 | 12 |
| C1 | 0,195 | 4,1 | 20 | 60,5 | 78,3 | 13,1 | 13,4 |
| C10 | 0,210 | 4,3 | 20 | 65,5 | 89,8 | 13,4 | 14,1 |

On obtient donc avec C1 et C10 d'excellentes réductions d'eau et d'excellentes résistances mécaniques à la fois en compression et en flexion.

**EXEMPLE 12**

Des mesures de la viscosité ont été effectuées dans une suspension aqueuse de $Cr_2O_3$, après 5 mn d'agitation, en fonction de la quantité du fluidifiant C5 de formule $HO-(CH_2CH_2O)_{100}-CH_2CH_2-N(CH_2-PO_3H_2)_2$. Le $Cr_2O_3$ testé est un pigment minéral commercialisé par BAYER sous la dénomination OXYDE DE CHROME VERT, Type GX, à 99-99,5 % de $Cr_2O_3$ (DIN 55905) et de granulométrie dominante de 0,35 microns.

Les suspensions testées contenaient 200 g de $Cr_2O_3$, 133,3 g d'eau et des quantités variables du fluidifiant C5, l'eau introduite avec le fluidifiant étant soustraite pour garder un rapport massique constant eau/minéral. La figure 4 représente l'évolution de la viscosité (en mPa.s) d'une suspension aqueuse de $Cr_2O_3$ à 60 % en fonction de la quantité de fluidifiant introduit.

**EXEMPLE 13**

Dans les conditions opératoires de l'exemple 12, des mesures de la viscosité ont été effectuées dans une suspension aqueuse de $Fe_2O_3$, après 5 mn d'agitation, en fonction de la quantité du fluidifiant C5. Le $Fe_2O_3$ testé est un pigment minéral commercialisé par BAYER sous la dénomination BAYFERROX brun de type 610, à 90-91 % de $Fe_2O_3$ et de granulométrie dominante de 0,3-0,6 microns. Les suspensions testées contenaient 200 g de $Fe_2O_3$, 133,3 g d'eau et des quantités variables du fluidifiant C5, l'eau introduite avec le fluidifiant étant soustraite pour garder un rapport massique constant eau/minéral. La figure 5 représente l'évolution de la viscosité (en mPa.s) en fonction de la quantité de fluidifiant introduit.

**EXEMPLE 14**

Cet exemple illustre l'insensibilité des composés (I) selon l'invention, en l'occurence le composé C5 (décrit notamment dans l'exemple précédent), à la présence de sels dans l'eau. Le comportement du fluidifiant C5 est comparé à celui du fluidifiant commercialisé par la société COATEX sous la dénomination AB100 : il s'agit d'un polyacrylate de sodium, habituellement employé pour fluidifier des suspensions de $CaCO_3$.

Dans une suspension aqueuse contenant 120 g de $CaCO_3$ (commercialisé par Solvay et de surface spécifique de

l'ordre de 22 $m^2/g$), 180 g d'eau et 1,2 g de fluidifiant, on ajoute progressivement une solution aqueuse contenant 50 % en poids de $CaCl_2$.

Les deux courbes représentées à la figure 6 montrent l'évolution de la viscosité Brookfield à 100 tr/mn (en mPa.s) en fonction de la quantité de la solution de $CaCl_2$ à 50 %.

**EXEMPLE 15**

Dans les conditions opératoires de l'exemple 12, des mesures de la viscosité ont été effectuées dans une suspension aqueuse de mica, après 5 mn d'agitation, en fonction de la quantité de fluidifiant C5. Le mica testé est commercialisé par la société KAOLINS D'ARVOR sous la dénomination MICARVOR 20 ; sa granulométrie à 99,95 % est inférieure à 0,100 mm, à 99,9 % inférieure à 0,063 mm et à 99,5 % inférieure à 0,040 mm.

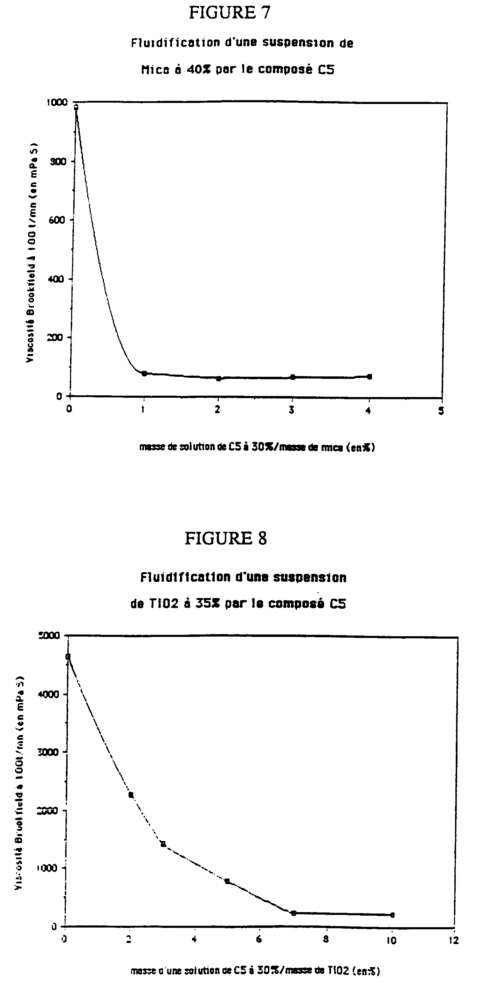

Les suspensions testées contenaient 200 g de mica, 133,3 g d'eau et des quantités variables du fludifiant C5, l'eau introduite avec le fluidifiant étant soustraite pour garder un rapport massique constant eau/minéral. La figure 7 montre l'évolution de la viscosité (en mPa.s) en fonction de la quantité de fluidifiant introduit.

**EXEMPLE 16**

Dans les conditions opératoires de l'exemple 12, des mesures de la viscosité ont été effectuées dans une suspension aqueuse de $TiO_2$, après 5 mn d'agitation, en fonction de la quantité de fluidifiant C5. Le $TiO_2$ testé est commercialisé par la société DEGUSSA sous la référence P25 ; la taille des particules est d'environ 21 nm (nanomètre) et leur surface spécifique est d'environ 50 $m^2/g$.

Les suspensions aqueuses testées contenaient 35 % en poids de $TiO_2$ avant la première addition de fluidifiant.

La figure 8 montre l'évolution de la viscosité (en mPa.s) en fonction de la quantité de fluidifiant introduit.

**EXEMPLE 17**

Cet exemple illustre l'effet de retard de prise de certains composés (I). Cet effet retard a été mesuré sur un mortier normalisé (NF P-18356) placé dans une coupelle tronconique. Après avoir arasé la surface de la coupelle remplie de ce mortier, la coupelle est placée dans un prisomètre automatique équipé d'une aiguille et d'une partie mobile conforme à la norme NF P-15414. Ce test consiste ensuite à faire tomber l'aiguille dans la coupelle.

On considère que :

- le début de la prise est réalisé dès que l'enfoncement de l'aiguille est arrêté à au moins 2,5 mm du fond de la coupelle,
- la fin de la prise est réalisée au bout du temps où l'aiguille ne pénètre pas, pour la première fois, à plus de 2,5 mm en dessous de la surface arasée de la coupelle.

Les produits testés sont décrits dans l'exemple 6.

| Produits | Dosage (1) en % | Début de prise | Fin de prise |
|---|---|---|---|
| Témoin | 0 | 4h 55 mn | 9h 06 mn |
| C2 (diphosphoné n = 10) | 0,3 | 10h 53 mn | 22h 19 mn |
| C1 (monophosphoné n = 10) | 0,3 | 5h 34 mn | 10h 45 mn |
| | | | |
| Témoin | 0 | 5h 05 mn | 7h 14 mn |
| C2 | 0,375 | 21h 43 mn | supérieure à 26h |
| C1 | 0,375 | 7h 53 mn | 10h 55 mn |
| | | | |
| Témoin | 0 | 4h 20 mn | 8h 31 mn |
| C4 (monophosphoné n = 100) | 0,3 | 6h 22 mn | 10h 10 mn |
| C5 (diphosphoné n = 100) | 0,3 | 7h 30 | 11h 57 |
| C3 (monophosphoné n = 50) | 0,3 | 5h 44 mn | 10h 18 mn |
| | | | |
| Témoin | 0 | 4h 21 mn | 9h 18 mn |
| C4 | 0,375 | 6h 18 mn | 12h 01 mn |
| C5 | 0,375 | 10h 45 mn | 12h 52 mn |
| C3 | 0,375 | 6h 57 mn | 9h 29 mn |

(1) les pourcentages sont donnés en % en sec par rapport à la quantité de ciment.

**Exemple 18**

Dans cet exemple, on a mis en oeuvre une solution aqueuse contenant 30 % (en poids rapporté au poids total de la solution) de composé C11 dont la pureté était de 85 % et répondant à la formule :

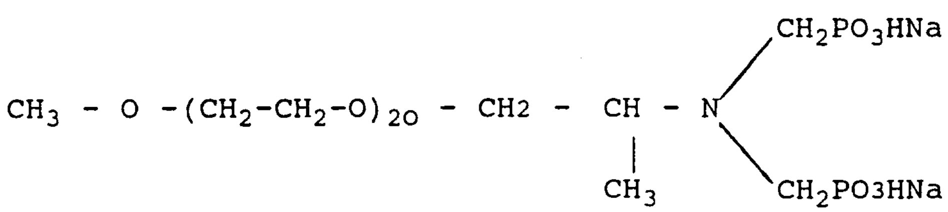

La solution aqueuse définie ci-dessus a été introduite dans du béton de composition :

- 900 kg de sable 0/5 du type silico-calcaire
- 530 kg de gravier 5/15 du type silico-calcaire
- 435 kg de granulat 15/25 du type silico-calcaire
- 375 kg de ciment CPA 55 PMES produit par la société CIMENTS LAFARGE dans son usine du Val d'Azergue,

à raison de 0,5 % en masse de solution aqueuse rapportés à la masse du béton.

Une solution du fluidifiant commercialisé par la société CHRYSO S.A. sous la marque SUPERPLAST 760 (il s'agit d'une solution aqueuse à base de polynaphtalène sulfonate) a également été introduite dans la même quantité de ce béton, à raison de 0,5 % en masse de solution de Superplast rapportés à la masse du béton.

Les quantités d'eau introduites à t=0, définies par le rapport massique eau/béton (e/c) ont été ajustées de façon à obtenir des fluidités (slumps) identiques pour les deux pâtes de béton à l'arrivée sur le chantier, soit à t=45 mn.

Le tableau suivant regroupe les résultats des mesures de fluidité (slump).

| | Pâte de béton comprenant 0,5 % de solution de Superplast 760 | Pâte de béton comprenant 0,5 % de solution du composé C11 |
|---|---|---|
| e/c | 0,43 | 0,39 |
| slump à t=0 | 22 | 19 |
| slump à t=45 mn | 19 | 18,5 |
| slump à t=4 H (1) | 0 (2) | 13,5 |

(1) slump mesuré aprés que le béton soit resté pendant 4 heures à l'air libre
(2) le béton est figé

Il apparaît donc, d'une part que le composé C11 permet d'obtenir une plus grande fluidité qui se traduit par une réduction d'eau de plus de 9 % (0,04/0,43) par rapport au Superplast 760 et, d'autre part, que la fluidité conférée par le composé C11 ne décroît que très lentement avec le temps.

Des mesures de résistance en compression des bétons obtenus après durcissement ont été effectuées selon la norme NF P-18406.

| | Béton comprenant le Superplast 760 | Béton comprenant le composé C11 | Amélioration induite par C11 par rapport au Superplast 760 |
|---|---|---|---|
| Résistance à t=7jours en MPa | 28,0 | 34,0 | + 21,4 % |
| Résistance à t=28 jours en MPa | 33,5 | 41,0 | +22,4 |

On constate que la résistance à t=7jours d'un béton comprenant le composé C11 de l'invention est égale, voire supérieure, à celle d'un béton comprenant le Superplast 760 après 28 jours de durcissement.

**Exemple 19**

Dans cet exemple, la solution aqueuse du composé C11 définie à l'exemple 18 a été introduite à t=0 dans un premier échantillon de pâte de mortier de composition :

- 300 g de ciment alumineux commercialisé par la société CIMENTS LAFARGE sous la marque LE FONDU
- 200 g d'un laitier commercialisé par la société anglaise "Civil & Marine"
- 1350 g de sable 0/5 du type silico-calcaire
- 175 g d'eau

à raison de 0,5 % en masse de solution aqueuse rapportés à la masse de mortier.

Dans un second échantillon, composé de la même quantité de pâte de mortier définie ci-dessus, ont été introduits, à t=0, 1,5 % d'un adjuvant du commerce à base de lignosulfonate commercialisé sous l'appellation P7 par la société CORMIX.

Dans un troisième échantillon, composé de la même quantité de pâte de mortier définie ci-dessus, ont été introduits, à t=0, 1,5 % de résine GT définie à l'exemple 8.

Les fluidités des mortiers obtenus, évalués au travers des étalements mesurés en cm à la table à chocs selon la norme ASTM C86091 sont indiqués dans le tableau suivant.

| | t = 0 | t = 1 h 30 | t = 24 h |
|---|---|---|---|
| mortier comprenant 1,5 % d'adjuvant du commerce à base de lignosulfonate | 97 | 69 | 40 |
| mortier comprenant 1,5 % de résine GT | /(1) | /(1) | /(1) |
| mortier comprenant 0,5 % de solution de C11 | 170 | 155 | 120 |

(1) La résine GT n'a qu'un effet de fluidisation fugace sur le mortier qu'il est impossible de mesurer.

De manière stupéfiante, on observe que les valeurs des étalements sont extrêmement élevées lorsque l'on met en oeuvre une solution aqueuse du composé C11 selon l'invention.

En outre, la fluidité du mortier obtenu avec C11 diminue très peu avec le temps puisqu'au terme de 24 h, elle est encore 3 fois supérieure à celle d'un mortier comprenant le fluidifiant du commerce à base de lignosulfonate.

Des mesures de résistance mécanique en compression (exprimée en MPa) selon la norme NF EN 1961 et des mesures d'étalements ont été effectuées sur :

- des échantillons du mortier défini ci-dessus (appelé mortier de référence),
- et sur des échantillons de mortiers dont les compositions étaient identiques à celle du mortier de référence, à l'exception de la teneur en eau que l'on a fait décroître.

Les différents mortiers contenaient :

- soit 0,5 % de solution aqueuse du composé C11
- soit 1,5 % de l'adjuvant à base de lignosulfonate déjà mentionné dans cet exemple.

| | Mortier contenant 0,5 % de solution de C11 | | | Mortier contenant 1,5 % d'adjuvant à base de lignosulfonate |
|---|---|---|---|---|
| Teneur en eau du mortier en g | 175 (référence) | 160 | 150 | 175 (référence) |
| Résistances en compression à t=24 h | 28 | 32 | 34 | 23 |
| Etalements | 170 | 140 | 135 | 97 |

Les composés selon l'invention permettent donc d'obtenir une fluidité supérieure à celle engendrée par les fluidifiants du commerce.

Par conséquent, à fluidité égale, une pâte de liant hydraulique contenant un composé selon l'invention aura le double avantage d'avoir moins d'eau et moins de composé selon l'invention, par rapport à une pâte de liant hydraulique contenant un fluidifiant du commerce.

Cette réduction d'eau (par rapport aux pâtes de liant hydraulique contenant un fluidifiant du commerce) a pour effet un accroissement des résistances mécaniques obtenues après durcissement.

**Exemple 20**

Le pouvoir fluidifiant du composé C6, défini à l'exemple 6, a été évalué en mesurant la viscosité de suspensions de particules minérales S1, S2 et S3 contenant 0,3 % en poids de composé C6 rapporté au poids de particules minérales.

La suspension S1 contenait de l'alumine $Al_2O_3$ commercialisée sous l'appellation P772SB par la société Péchiney et ayant une surface spécifique massique de 7,5 $m^2/g$.

La suspension S2 contenait du fluorure de calcium $CaF_2$ précipité, commercialisé par Prolabo et ayant une surface spécifique massique de 9 $m^2/g$.

La suspension S3 contenait de la silice $SiO_2$ broyée commercialisée par Sifraco sous la marque Sikron C800 et ayant une surface spécifique massique de 6 $m^2/g$.

Les rapports massiques (eau/solide) de la quantité d'eau sur la quantité de particules sont donnés dans le tableau suivant dans lequel figurent, en outre, les résultats des mesures de viscosité effectuées à l'aide d'un appareil de mesure commercialisé par la société Contraves sous l'appellation Rhéomat 120.

| | sans fluidifiant | | avec 0,3 % de C6 | |
|---|---|---|---|---|
| Suspension | eau/solide | Viscosité (Pa.s) à $90s^{-1}$ | eau/solide | Viscosité (Pa.S) à $90S^{-1}$ |
| S1 | 0,57 | 1,0 | 0,21 | 0,7 |
| S2 | 0,50 | 2,1 | 0,30 | 1,9 |
| S3 | 0,58 | non mesurable (1) | 0,45 | 7,0 |

(1) seuil de cisaillement hors des limites supérieures de l'appareil.

Les réductions d'eau, définies comme étant la diminution de la teneur en eau engendrée par C6 par rapport à une suspension ne contenant pas de composé C6 et présentant la même viscosité, sont de plus de 63 % pour S1, de plus de 40 % pour S2 et de plus de 22 % pour S3 (les pourcentages étant exprimés par rapport aux viscosités des suspensions ne contenant pas le composé C6).

**Revendications**

1. Utilisation comme agents fluidifiants pour suspensions aqueuses de particules minérales et de pâtes de liant hydraulique de composés (I) ou des sels des composés (I), lesdits composés (I) répondant à la formule :

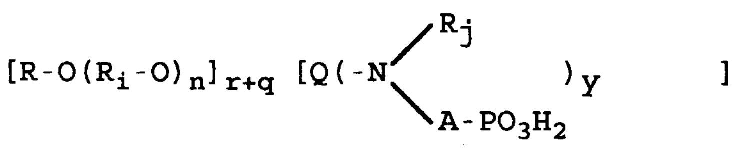

dans laquelle :

- R est un atome d'hydrogène ou un groupe hydrocarboné monovalent saturé ou non comportant de 1 à 18 inclus atomes de carbone et éventuellement un ou plusieurs hétéroatomes,
- les $R_i$ sont semblables ou différents entre eux et représentent un alkylène comme l'éthylène, le propylène, le butylène, l'amylène, l'octylène ou le cyclohexène, ou un arylène comme le styrène ou le méthylstyrène ; les $R_i$ renferment éventuellement un ou plusieurs hétéroatomes,
- Q est un groupe hydrocarboné comportant de 2 à 18 inclus atomes de carbone et éventuellement un ou plusieurs hétéroatomes,
- A est un groupe alkylidène comportant de 1 à 5 inclus atomes de carbone,
- les $R_j$ sont semblables ou différents entre eux et peuvent être choisis parmi:
  - le groupe $A-PO_3H_2$, A ayant la signification précitée,
  - le groupe alkyle comportant de 1 à 18 inclus atomes de carbone et pouvant porter des groupements $[R-O(R_i-O)n]$, R et $R_i$ ayant les significations précitées,
  - et le groupe

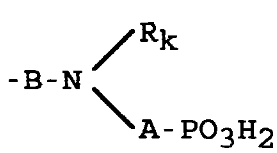

- $R_k$ désignant un groupement tel que $R_j$,
- B désignant un groupement alkylène comportant de 2 à 18 inclus atomes de carbone,

- "n" est un nombre supérieur à 0,
- "r" est le nombre des groupes [R-O($R_i$-O)n] portés par l'ensemble des $R_j$,
- "q" est le nombre des groupes [R-O($R_i$-O)n] portés par Q,
- la somme "r+q" est comprise entre 1 et 10 inclus,
- "y" est un nombre entier compris entre 1 et 3 inclus,
- Q, N et les $R_j$ peuvent former ensemble un ou plusieurs cycles, ce ou ces cycles pouvant en outre contenir un ou plusieurs autres hétéroatomes.

2. Utilisation selon la revendication 1, caractérisée en ce que R est un atome d'hydrogène, un groupe méthyle, éthyle ou nonylphénol, ou un groupe hydrocarboné, saturé ou non, et comportant de 12 à 18 atomes de carbone.

3. Utilisation selon la revendication 2, caractérisée en ce que R est un atome d'hydrogène.

4. Utilisation selon l'une quelconque des revendications 1 à 3, caractérisée en ce que les groupes $R_i$ sont choisis parmi l'éthylène et le propylène.

5. Utilisation selon la revendication 4, caractérisée en ce que $R_i$ est majoritairement, voire uniquement l'éthylène, le nombre de motifs d'éthylène correspondant à $R_i$ étant suffisant pour conserver le caractère hydrosoluble ou hydrodispersable des composés (I) ou de leurs sels.

6. Utilisation selon l'une quelconque des revendications 1 à 5, caractérisée en ce que Q comporte de 2 à 12 inclus atomes de carbone, de préférence de 2 à 6 inclus atomes de carbone, et de préférence encore, représente l'éthylène, le cyclo-hexène ou le n-hexène.

7. Utilisation selon l'une quelconque des revendications 1 à 6, caractérisée en ce que le groupe alkylidène A comporte de 1 à 3 inclus atomes de carbone.

8. Utilisation selon la revendication 7, caractérisée en ce que A est le groupe méthylène.

9. Utilisation selon l'une quelconque des revendications 1 à 8, caractérisée en ce que le groupe $R_j$ est le groupe $-CH_2-PO_3H_2$, éventuellement salifié.

10. Utilisation selon l'une quelconque des revendications 1 à 8, caractérisée en ce que le groupement $R_j$ est le groupe méthyle.

11. Utilisation selon l'une quelconque des revendications 1 à 8, caractérisée en ce que le groupe $R_j$ est le groupe $-C_2H_4N(CH_2-PO_3H_2)_2$, éventuellement salifié.

12. Utilisation selon l'une quelconque des revendications 1 à 11, caractérisée en ce que les sels sont des sels de sodium, de calcium ou de diéthanolamine.

13. Utilisation selon l'une quelconque des revendications 1 à 12, caractérisée en ce que "n" est compris entre 1 et 10 000 inclus.

14. Utilisation selon la revendication 13, caractérisée en ce que "n" est compris entre 1 et 500 inclus.

15. Utilisation selon la revendication 14, caractérisée en ce que "n" est compris entre 1 et 250 inclus.

16. Utilisation selon l'une quelconque des revendications 1 à 15, caractérisée en ce que la somme "r + q" est inférieure à 3.

17. Utilisation selon la revendication 16, caractérisée en ce que la somme "r + q" est égale à 1.

18. Utilisation selon l'une quelconque des revendications 1 à 17 caractérisée en ce que "y" est égal à 1.

19. Utilisation selon l'une quelconque des revendications 1 à 18 caractérisée en ce que les suspensions aqueuses de

particules minérales sans prise hydraulique sont des charges calciques telles que le carbonate de calcium, le sulfate de calcium dihydraté, la chaux éteinte ou le fluorure de calcium ; les oxydes minéraux tels que le dioxyde de titane, l'oxyde ferrique, l'oxyde de chrome, la silice ou les alumines, ou d'autres charges telles que les silicates comme par exemple le mica.

**20.** Utilisation selon l'une quelconque des revendications 1 à 19, caractérisée en ce que les pâtes de liant hydraulique sont des pâtes de ciment Portland, de ciments alumineux , de plâtre $\alpha$ ou $\beta$, de chaux vive, de phases pures des ciments C3S, C4AF, C3A, C12A7, CA, C2A ou des mélanges de ces pâtes.

**21.** Nouveaux composés (III) et leurs sels, lesdits composés (III) répondant à la formule :

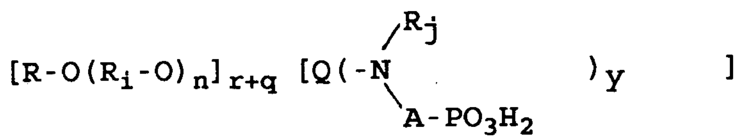

dans laquelle :

- R est un atome d'hydrogène ou un groupe hydrocarboné monovalent saturé ou non comportant de 1 à 18 inclus atomes de carbone et éventuellement un ou plusieurs hétéroatomes.
- Les $R_i$ sont semblables ou différents entre eux et représentent un alkylène comme l'éthylène, le propylène, l'amylène, l'octylène ou le cyclohexène ou un arylène comme le styrène ou le méthylstyrène. Les $R_i$ renferment éventuellement un ou plusieurs hétéroatomes ;
- Q est un groupe hydrocarboné comportant de 2 18 inclus atomes de carbone et éventuellement un ou plusieurs hétéroatomes ;
- A est un groupement alkylidène comportant de 1 à 5 inclus atomes de carbone ;
- les $R_j$ sont semblables ou différents entre eux et peuvent être choisis parmi :

  * le groupe $-A-PO_3H_2$, A ayant la signification précitée,
  * un groupe alkyle comportant de 1 à 18 inclus atomes de carbone et pouvant porter des groupements [R-O($R_i$-O)n], R et $R_i$ ayant les significations précitées,
  * et le groupement :

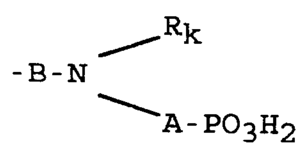

    - $R_k$ désignant un groupement tel que $R_j$,
    - B désignant un groupement alkylène comportant de 2 à 18 inclus atomes de carbone,

- "n" est un nombre supérieur ou égal à 0, mais n est différent de 0 lorsque R est un atome d'hydrogène,
- "r" est la somme des groupements [R-O($R_i$-O)n] portés par l'ensemble des $R_j$,
- "q" est le nombre des groupements [R-O($R_i$-O)n] portés par Q,
- la somme "r+q" est comprise entre 1 et 10 inclus,
- "y" est un nombre entier compris entre 1 et 3 inclus,
- Q, N et les $R_j$ peuvent former ensemble un ou plusieurs cycles , ce ou ces cycles pouvant en outre contenir un ou plusieurs autres hétéroatomes,

à l'exclusion des composés (I) et de leurs sels pour lesquels :

* soit :

  . R est un alkyle ayant de 1 à 5 inclus atomes de carbone et

. $R_i$ comporte de 2 à 5 inclus atomes de carbone et
. "y"= 1, "r" = 0, "q" = 1, "n" ≤ 20 et
. $R_j$ = A-$PO_3H_2$, A ayant la signification précitée, et
. Q comporte de 3 à 5 inclus atomes de carbone,

* soit :

. R est un atome d'hydrogène et
. Ri est un groupement éthylène et
. "y" = 1, "r" = 0, "q" = 1, "n" = 1 et
. $R_j$ = A-$PO_3H_2$, A ayant la signification précitée, et . Q est un groupement éthylène.

**22.** Nouveaux composés selon la revendication 21, caractérisés en ce que R est un atome d'hydrogène ou un groupe méthyle, éthyle, nonylphénol, ou un groupe hydrocarboné, saturé ou non, et comportant de 12 à 18 atomes de carbone.

**23.** Nouveaux composés selon la revendication 22, caractérisés en ce que R est un atome d'hydrogène.

**24.** Nouveaux composés selon l'une quelconque des revendications 21 à 23, caractérisés en ce que "n" est supérieur à 0 et en ce que les groupes $R_i$ sont choisis parmi l'éthylène et le propylène.

**25.** Nouveaux composés selon la revendication 24, caractérisés en ce que $R_i$ est majoritairement, voire uniquement l'éthylène, le nombre de motifs d'éthylène correspondant à $R_i$ étant suffisant pour conserver le caractère hydrosoluble ou hydrodispersable des composés (I).

**26.** Nouveaux composés selon l'une quelconque des revendications 21 à 25, caractérisés en ce que Q comporte de 2 à 12 inclus atomes de carbone, de préférence de 2 à 6 inclus atomes de carbone, et de préférence encore représente l'éthylène, le cyclohexène ou le n-hexène.

**27.** Nouveaux composés selon l'une quelconque des revendications 21 à 26, caractérisés en ce que le groupe alkylidène A comporte de 1 à 3 inclus atomes de carbone.

**28.** Nouveaux composés selon la revendication 27, caractérisés en ce que A est le groupe méthylène.

**29.** Nouveaux composés selon l'une quelconque des revendications 21 à 28, caractérisés en ce que le groupement $R_j$ est le groupe -$CH_2$-$PO_3H_2$, éventuellement salifié.

**30.** Nouveaux composés selon l'une quelconque des revendications 21 à 28, caractérisés en ce que le groupe $R_j$ est le groupe méthyle.

**31.** Nouveaux composés selon l'une quelconque des revendications 21 à 28, caractérisés en ce que le groupement $R_j$ est le groupe -$C_2H_4N(CH_2$-$PO_3H_2)_2$, éventuellement salifié.

**32.** Nouveaux composés selon l'une quelconque des revendications 21 à 31, caractérisés en ce que les sels sont des sels de sodium, de calcium ou de diéthanolamine.

**33.** Nouveaux composés selon l'une quelconque des revendications 21 à 32, caractérisés en ce que "n" est compris entre 1 et 10 000 inclus.

**34.** Nouveaux composés selon la revendication 33, caractérisés en ce que "n" est compris entre 1 et 500 inclus.

**35.** Nouveaux composés selon la revendication 34, caractérisés en ce que "n" est compris entre 1 et 250 inclus.

**36.** Nouveaux composés selon l'une quelconque des revendications 21 à 35, caractérisés en ce que la somme "r + q" est inférieure à 3.

**37.** Nouveaux composés selon la revendication 36, caractérisée en ce que la somme "r + q" est égale à 1.

**38.** Nouveaux composés selon' l'une quelconque des revendications 21 à 37, caractérisés en ce que "y" est égal à 1.

**39.** Utilisation des composés (I) ou de leurs sels définis à la revendication 1 comme agents de maintien de la fluidité de pâtes de liant hydraulique.

**40.** Utilisation selon l'une quelconque des revendications 1 à 20 ou selon la revendication 39, caractérisée en ce que les composés (I) ou leurs sels sont utilisés en combinaison avec d'autres additifs et, en particulier, avec d'autres fluidifiants.

**Claims**

**1.** Use as fluidizing agents for aqueous suspensions of mineral particles and hydraulic binder pastes of compounds (I) or salts of compounds (I), said compounds (I) corresponding to the formula:

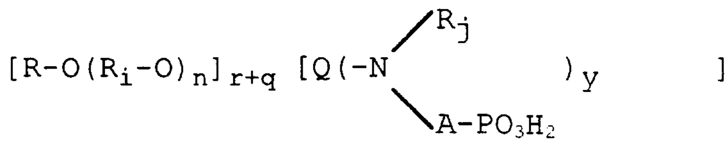

in which:

- R is a hydrogen atom or a monovalent hydrocarbon group, saturated or unsaturated, comprising 1 to 18 carbon atoms inclusive and possibly one or more heteroatoms,
- the $R_i$ groups are similar to or different from one another and represent an alkylene such as ethylene, propylene, butylene, amylene, octylene or cyclohexene, or an arylene such as styrene or methylstyrene ; the $R_i$ groups possibly contain one or more heteroatoms,
- Q is a hydrocarbon group having 2 to 18 carbon atoms inclusive and possibly one or more heteroatoms,
- A is an alkylidene group having 1 to 5 carbon atoms inclusive,
- the $R_j$ groups are similar to or different from one another and can be chosen among:

  * the $A-PO_3H_2$ group, A having the above-mentioned meaning,
  * the alkyl group having 1 to 18 carbon atoms inclusive and able to carry $[R-O(R_i-O)n]$ groups, R and $R_i$ having the above-mentioned meanings,
  * and the group

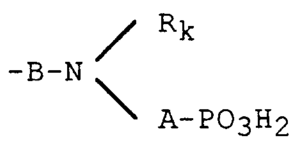

    - $R_k$ designating a group such as $R_j$,
    - B designating an alkylene group having 2 to 18 carbon atoms inclusive,

  * "n" is a number greater than 0,
  * "r" is the number of $[R-O(R_i-O)n]$ groups carried by all the $R_j$ groups,
  * "q" is the number of $[R-O(R_i-O)n]$ groups carried by Q,
  * the sum "r+q" is comprised between 1 and 10 inclusive,
  * "y" is a whole number comprised between 1 and 3 inclusive,
  * Q, N and the $R_j$ groups can form together one or more rings, this ring or these rings able, moreover, to contain one or more other heteroatoms.

**2.** Use according to claim 1, characterised in that R is a hydrogen atom, or a methyl, ethyl or nonylphenol group, or a saturated or unsaturated hydrocarbon group, having 12 to 18 carbon atoms.

**3.** Use according to claim 2, characterised in that R is a hydrogen atom.

4. Use according to any one of claims 1 to 3, characterised in that the $R_i$ groups are chosen among ethylene and propylene.

5. Use according to claim 4, characterised in that $R_i$ is mostly, even solely, ethylene, the number of ethylene groups corresponding to $R_i$ being sufficient to conserve the water-soluble or water-dispersible character of compounds (I) or their salts.

6. Use according to any one of claims 1 to 5, characterised in that Q has 2 to 12 carbon atoms inclusive, preferably 2 to 6 carbon atoms inclusive, and more preferably, represents ethylene, cyclohexene or n-hexene.

7. Use according to any one of claims 1 to 6, characterised in that the alkylidene group A has 1 to 3 carbon atoms inclusive.

8. Use according to claim 7, characterised in that A is the methylene group.

9. Use according to any one of claims 1 to 8, characterised in that the $R_j$ group is the $-CH_2-PO_3H_2$ group, possibly in salt form.

10. Use according to any one of claims 1 to 8, characterised in that the $R_j$ group is the methyl group.

11. Use according to any one of claims 1 to 8, characterised in that the $R_j$ group is the $-C_2H_4N(CH_2-PO_3H_2)_2$ group, possibly in salt form.

12. Use according to any one of claims 1 to 11, characterised in that the salts are sodium, calcium or diethanolamine salts.

13. Use according to any one of claims 1 to 12, characterised in that "n" is comprised between 1 and 10,000 inclusive.

14. Use according to claim 13, characterised in that "n" is comprised between 1 and 500 inclusive.

15. Use according to claim 14, characterised in that "n" is comprised between 1 and 250 inclusive.

16. Use according to any one of claims 1 to 15, characterised in that the sum "r + q" is less than 3.

17. Use according to claim 16, characterised in that the sum "r + q" is equal to 1.

18. Use according to any one of claims 1 to 17, characterised in that "y" is equal to 1.

19. Use according to any one of claims 1 to 18, characterised in that the aqueous suspensions of mineral particles without hydraulic setting are calcium fillers, such as calcium carbonate or dihydrated calcium sulfate, slaked lime or calcium fluoride; mineral oxides, such as titanium dioxide, ferric oxide or chromium oxide, silica or the aluminas, or other fillers, such as silicates such as, for example, mica.

20. Use according to any one of claims 1 to 19, characterised in that hydraulic binder pastes are pastes of Portland cement, aluminous cements, α or β plaster, quicklime, pure phases of C3S, C4AF, C3A, C12A7, CA, C2A cements or mixtures of these pastes.

21. Novel compounds (III) and their salts, said compounds (III) corresponding to the formula:

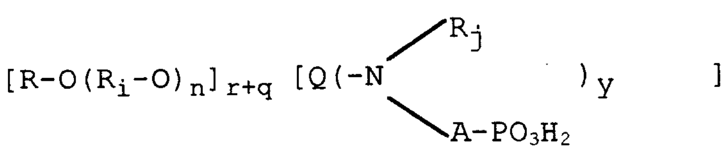

in which:

- R is a hydrogen atom or monovalent saturated or unsaturated hydrocarbon group having 1 to 18 carbon atoms inclusive and possibly one or more heteroatoms.

- the $R_i$ groups are similar to or different from one another and represent an alkylene, such as ethylene, propylene, amylene, octylene, or cyclohexene, or an arylene such as styrene or methylstyrene. The $R_i$ groups possibly contain one or more heteroatoms ;
- Q is a hydrocarbon group having 2 to 18 carbon atoms inclusive and possibly one or more heteroatoms ;
- A is an alkylidene group comprising 1 to 5 carbon atoms inclusive ;
- the $R_j$ groups are similar to or different from one another and can be chosen among:

  * the $-A-PO_3H_2$ group, A having the above-mentioned meaning,
  * an alkyl group having 1 to 18 carbon atoms inclusive and able to carry [R-O($R_i$-O)n] groups, R and $R_i$ having the above-mentioned meanings,
  * and the group :

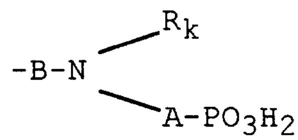

    - $R_k$ designating a group such as $R_j$,
    - B designating an alkylene group having 2 to 18 carbon atoms inclusive,

- "n" is a number greater or equal to 0, but n is different from 0 when R is a hydrogen atom,
- "r" is the sum of [R-O($R_i$-O)n] groups carried by all the $R_j$ groups,
- "q" is the number of [R-O($R_i$-O)n] groups carried by Q,
- the sum "r+q" is comprised between 1 and 10 inclusive,
- "y" is a whole number comprised between 1 and 3 inclusive,
- Q, N and the $R_j$ groups can form together one or more rings, this ring or these rings able, moreover, to contain one or more heteroatoms, with exclusion of compounds (I) and their salts for which:

  * either:

    . R is an alkyl having 1 to 5 carbon atoms inclusive and
    . $R_i$ has 2 to 5 carbon atoms inclusive and
    . "y" = 1, "r" = 0, "q" = 1, "n" $\leq$ 20 and
    . $R_j = A-PO_3H_2$, A having the above-mentioned meaning, and
    . Q has 3 to 5 carbon atoms inclusive,

  * or:

    . R is a hydrogen atom, and
    . Ri is an ethylene group, and
    . "y" = 1, "r" = 0, "q" = 1, "n" = 1 and
    . $R_j = A-PO_3H_2$, A having the above-mentioned meaning, and
    . Q is an ethylene group.

**22.** Novel compounds according to claim 21, characterised in that R is a hydrogen atom or a methyl, ethyl or nonylphenol group, or a saturated or unsaturated hydrocarbon group, and has 12 to 18 carbon atoms.

**23.** Novel compounds according to claim 22, characterised in that R is a hydrogen atom.

**24.** Novel compounds according to any one of claims 21 to 23, characterised in that the $R_i$ groups are chosen among ethylene and propylene.

**25.** Novel compounds according to claim 24, characterised in that $R_i$ is primarily, even solely ethylene, the number of ethylene groups corresponding to $R_i$ being sufficient to preserve the water-soluble or water-dispersible character of compounds (I).

**26.** Novel compounds according to any one of claims 21 to 25, characterised in that Q has 2 to 12 carbon atoms inclusive, preferably 2 to 6 carbon atoms inclusive, and more preferably still, represents ethylene, cyclohexene or n-hexene.

**27.** Novel compounds according to any one of claims 21 to 26, characterised in that the alkylidene group A has 1 to 3 carbon atoms inclusive.

**28.** Novel compounds according to claim 27, characterised in that A is the methylene group.

**29.** Novel compounds according to any one of claims 21 to 28, characterised in that the $R_j$ group is the $-CH_2-PO_3H_2$ group, possibly in salt form.

**30.** Novel compounds according to any one of claims 21 to 28, characterised in that the $R_j$ group is the methyl group.

**31.** Novel compounds according to any one of claims 21 to 28, characterised in that the $R_j$ group is the $-C_2H_4N(CH_2-PO_3H_2)_2$ group, possibly in salt form.

**32.** Novel compounds according to any one of claims 21 to 31, characterised in that the salts are sodium, calcium or diethanolamine salts.

**33.** Novel compounds according to any one of claims 21 to 32, characterised in that "n" is comprised between 1 and 10,000 inclusive.

**34.** Novel compounds according to claim 33, characterised in that "n" is comprised between 1 and 500 inclusive.

**35.** Novel compounds according to claim 34, characterised in that "n" is comprised between 1 and 250 inclusive.

**36.** Novel compounds according to any one of claims 21 to 35, characterised in that the sum "r + q" is less than 3.

**37.** Novel compounds according to claim 36, characterised in that the sum "r + q" is equal to 1.

**38.** Novel compounds according to any one of claims 21 to 37, characterised in that "y" is equal to 1.

**39.** Use of compounds (I) or of their salts defined in claim 1 as agents for maintaining the fluidity of hydraulic binder pastes.

**40.** Use according to any one of claims 1 to 20 or according to claim 39, characterised in that compounds (I) or their salts are used in combination with other additives and, in particular, with other fluidizing agents.

## Patentansprüche

**1.** Verwendung von Verbindungen (I) oder der Salze der Verbindungen (I) als Verflüssiger für wäßrige Suspensionen von mineralischen Partikeln und von hydraulischen Binderpasten, wobei genannte Verbindungen (I) der Formel

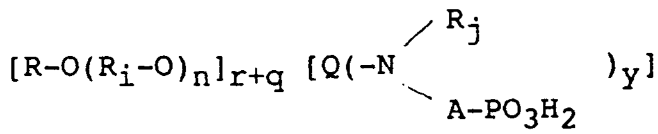

entsprechen, worin:

- R ein Wasserstoffatom oder eine gesättigte oder ungesättigte einwertige Kohlenwasserstoffgruppe ist, welche 1 bis einschließlich 18 Kohlenstoffatome und gegebenenfalls ein oder mehrere Heteroatome enthält,
- die $R_i$ gleich oder untereinander verschieden sind und ein Alkylen wie Ethylen, Propylen, Butylen, Amylen, Octylen oder Cyclohexen oder ein Arylen wie Styrol oder Methylstyrol darstellen, wobei die $R_i$ gegebenenfalls ein oder mehrere Heteroatome enthalten,
- Q eine Kohlenwasserstoffgruppe ist, welche 2 bis einschließlich 18 Kohlenstoffatome und gegebenenfalls ein oder mehrere Heteroatome enthält,

- A eine Alkylidengruppe ist, welche 1 bis einschließlich 5 Kohlenstoffatome enthält,
- die $R_j$ gleich oder untereinander verschieden sind und ausgewählt sein können unter:
  - der Gruppe A-$PO_3H_2$, wobei A die vorgenannte Bedeutung hat,
  - der Alkylgruppe, welche 1 bis einschließlich 18 Kohlenstoffatome enthält und Gruppen [R-O($R_i$-O)$_n$] tragen kann, wobei R und $R_i$ die vorgenannten Bedeutungen haben,
  - und der Gruppe

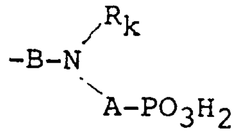

    - wobei $R_k$ eine solche Gruppe wie $R_j$ bezeichnet,
    - B eine Alkylengruppe bezeichnet, welche 2 bis einschließlich 18 Kohlenstoffatome enthält,
- "n" eine Zahl größer als 0 ist,
- "r" die Zahl der von der Gesamtheit der $R_j$ getragenen Gruppen [R-O($R_i$-O)$_n$] ist,
- "q" die Zahl der von der Gesamtheit der Q getragenen Gruppen [R-O($R_i$-O)$_n$] ist,
- die Summe "r + q" zwischen 1 und 10 liegt, diese Zahlen eingeschlossen,
- "y" eine ganze Zahl zwischen 1 und 3 ist, diese Zahlen eingeschlossen,
- Q, N und die $R_j$ zusammen einen oder mehrere Ringe bilden können, wobei der Ring oder die Ringe ferner ein oder mehrere andere Heteroatome enthalten können.

**2.** Verwendung nach Anspruch 1, dadurch gekennzeichnet, daß R ein Wasserstoffatom, eine Methyl-, Ethyl oder Nonylphenolgruppe oder eine gesättigte oder ungesättigte Kohlenwasserstoffgruppe ist, welche 12 bis 18 Kohlenstoffatome enthält.

**3.** Verwendung nach Anspruch 2, dadurch gekennzeichnet, daß R ein Wasserstoffatom ist.

**4.** Verwendung nach einem der Ansprüche 1 bis 3, dadurch gekennzeichnet, daß die Gruppen $R_i$ unter Ethylen und Propylen ausgewählt sind.

**5.** Verwendung nach Anspruch 4, dadurch gekennzeichnet, daß $R_i$ mehrheitlich, ja sogar ausschließlich Ethylen ist, wobei die Zahl der Ethylengruppen, die $R_i$ entsprechen, ausreichend ist, um den wasserlöslichen oder wasserdispergierbaren Charakter der Verbindungen (I) oder ihrer Salze zu bewahren.

**6.** Verwendung nach einem der Ansprüche 1 bis 5, dadurch gekennzeichnet, daß Q 2 bis einschließlich 12, vorzugsweise 2 bis einschließlich 6 Kohlenstoffatome enthält und ferner bevorzugt Ethylen, Cyclohexen oder n-Hexen darstellt.

**7.** Verwendung nach einem der Ansprüche 1 bis 6, dadurch gekennzeichnet, daß die Alkylidengruppe A 1 bis einschließlich 3 Kohlenstoffatome enthält.

**8.** Verwendung nach Anspruch 7, dadurch gekennzeichnet, daß A die Methylengruppe ist.

**9.** Verwendung nach einem der Ansprüche 1 bis 8, dadurch gekennzeichnet, daß die Gruppe $R_j$ die Gruppe -$CH_2$-$PO_3H_2$, gegebenenfalls in Salzform, ist.

**10.** Verwendung nach einem der Ansprüche 1 bis 8, dadurch gekennzeichnet, daß die Gruppe $R_j$ die Methylgruppe ist.

**11.** Verwendung nach einem der Ansprüche 1 bis 8, dadurch gekennzeichnet, daß die Gruppe $R_j$ die Gruppe -$C_2H_4N(CH_2$-$PO_3H_2)_2$, gegebenenfalls in Salzform, ist.

**12.** Verwendung nach einem der Ansprüche 1 bis 11, dadurch gekennzeichnet, daß die Salze Natrium-, Calcium- oder Diethanolaminsalze sind.

**13.** Verwendung nach einem der Ansprüche 1 bis 12, dadurch gekennzeichnet, daß "n" zwischen 1 und 10 000 liegt, diese Zahlen eingeschlossen.

**14.** Verwendung nach Anspruch 13, dadurch gekennzeichnet, daß "n" zwischen 1 und 500 liegt, diese Zahlen eingeschlossen,

**15.** Verwendung nach Anspruch 14, dadurch gekennzeichnet, daß "n" zwischen 1 und 250 liegt, diese Zahlen eingeschlossen,

**16.** Verwendung nach einem der Ansprüche 1 bis 15, dadurch gekennzeichnet, daß die Summe "r + q" kleiner als 3 ist.

**17.** Verwendung nach Anspruch 16, dadurch gekennzeichnet, daß die Summe "r + q" gleich 1 ist.

**18.** Verwendung nach einem der Ansprüche 1 bis 17, dadurch gekennzeichnet, daß "y" gleich 1 ist.

**19.** Verwendung nach einem der Ansprüche 1 bis 18, dadurch gekennzeichnet, daß die wäßrigen Suspensionen mineralischer Partikel ohne hydraulisches Abbinden kalkige Füllstoffe wie Calciumcarbonat, Calciumsulfat-dihydrat, gelöschter Kalk oder Calciumfluorid, mineralische Oxide wie Titandioxid, Eisen(III)-oxid, Chromoxid, Siliciumdioxid oder Aluminiumoxide oder andere Füllstoffe wie Silicate, beispielsweise Glimmer, sind.

**20.** Verwendung nach einem der Ansprüche 1 bis 19, dadurch gekennzeichnet, daß die hydraulischem Binderpasten Pasten von Portlandzement, von Tonerdezementen, von α- oder β-Gips, von ungelöschtem Kalk, von reinen Phasen der Zemente C3S, C4AF, C3A, C12A7, CA, C2A oder Mischungen dieser Pasten sind.

**21.** Neue Verbindungen (III) und ihre Salze, wobei genannte Verbindungen (III) der Formel:

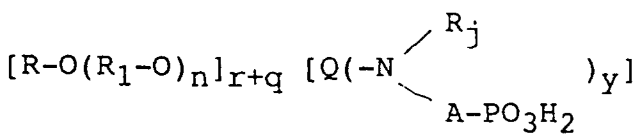

entsprechen, worin:

- R ein Wasserstoffatom oder eine gesättigte oder ungesättigte einwertige Kohlenwasserstoffgruppe ist, welche 1 bis einschließlich 18 Kohlenstoffatome und gegebenenfalls ein oder mehrere Heteroatome enthält,
- die $R_i$ gleich oder untereinander verschieden sind und ein Alkylen wie Ethylen, Propylen, Butylen, Amylen, Octylen oder Cyclohexen oder ein Arylen wie Styrol oder Methylstyrol darstellen, wobei die $R_i$ gegebenenfalls ein oder mehrere Heteroatome enthalten,
- Q eine Kohlenwasserstoffgruppe ist, welche 2 bis einschließlich 18 Kohlenstorfatome und gegebenenfalls ein oder mehrere Heteroatome enthält,
- A eine Alkylidengruppe ist, welche 1 bis einschließlich 5 Kohlenstoffatome enthält,
- die $R_j$ gleich oder untereinander verschieden sind und ausgewählt sein können unter:
  - der Gruppe $-A-PO_3H_2$, wobei A die vorgenannte Bedeutung hat,
  - einer Alkylgruppe, welche 1 bis einschließlich 18 Kohlenstoffatome enthält und Gruppen $[R-O(R_i-O)_n]$ tragen kann, wobei R und $R_i$ die vorgenannten Bedeutungen haben,
  - und der Gruppe

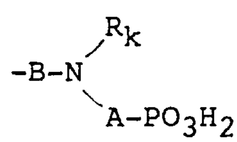

- wobei $R_k$ eine solche Gruppe wie $R_j$ bezeichnet,
- B eine Alkylengruppe bezeichnet, welche 2 bis einschließlich 18 Kohlenstoffatome enthält,

- "n" eine Zahl größer als oder gleich 0 ist, die aber von 0 verschieden ist, wenn R ein Wasserstoffatom ist,
- "r" die Summe der von der Gesamtheit der $R_j$ getragenen Gruppen $[R\text{-}O(R_i\text{-}O)_n]$ ist,
- "q" die Zahl der von der Gesamtheit der Q getragenen Gruppen $[R\text{-}O(R_i\text{-}O)_n]$ ist,
- die Summe "r + q" zwischen 1 und 10 liegt, diese Zahlen eingeschlossen,
- "y" eine ganze Zahl zwischen 1 und 3 ist, diese Zahlen eingeschlossen,
- Q, N und die $R_j$ zusammen einen oder mehrere Ringe bilden können, wobei der Ring oder die Ringe ferner ein oder mehrere andere Heteroatome enthalten können,
  unter Ausschluß der Verbindungen (I) und ihrer Salze, für die:
- entweder:
  - R ein Alkyl ist, welches 1 bis einschließlich 5 Kohlenstoffatome hat und
  - $R_i$ 2 bis einschließlich 5 Kohlenstoffatome enthält und
  - "y" = 1, "r" = 0, "q" = 1, "n" $\leq$ 20 und
  - $R_j = A\text{-}PO_3H_2$, wobei A die vorgenannte Bedeutung hat und
  - Q 3 bis einschließlich 5 Kohlenstoffatome enthält,
- oder:
  - R ein Wasserstoffatom ist und
  - $R_i$ eine Ethylengruppe ist und
  - "y" = 1, "r" = 0, "q" = 1, "n" = 1 und
  - $R_j = A\text{-}PO_3H_2$, wobei A die vorgenannte Bedeutung hat und
  - Q eine Ethylengruppe ist.

**22.** Neue Verbindungen nach Anspruch 21, dadurch gekennzeichnet, daß R ein Wasserstoffatom oder eine Methyl-, Ethyl-, Nonylphenolgruppe oder eine gesättigte oder ungesättigte Kohlenwasserstoffgruppe ist, welche 12 bis 18 Kohlenstoffatome enthält.

**23.** Neue Verbindungen nach Anspruch 22, dadurch gekennzeichnet, daß R ein Wasserstoffatom ist.

**24.** Neue Verbindungen nach einem der Ansprüche 21 bis 23, dadurch gekennzeichnet, daß "n" größer als 0 ist und daß die Gruppen $R_i$ unter Ethylen und Propylen ausgewählt sind.

**25.** Neue Verbindungen nach Anspruch 24, dadurch gekennzeichnet, daß $R_i$ mehrheitlich, ja sogar ausschließlich Ethylen ist, wobei die Zahl der Ethylengruppen, die $R_i$ entsprechen, ausreichend ist, um den wasserlöslichen oder wasserdispergierbaren Charakter der Verbindungen (I) zu bewahren.

**26.** Neue Verbindungen nach einem der Ansprüche 21 bis 25, dadurch gekennzeichnet, daß Q 2 bis einschließlich 12, vorzugsweise 2 bis einschließlich 6 Kohlenstoffatome enthält und ferner bevorzugt Ethylen, Cyclohexen oder n-Hexen darstellt.

**27.** Neue Verbindungen nach einem der Ansprüche 21 bis 26, dadurch gekennzeichnet, daß die Alkylidengruppe A 1 bis einschließlich 3 Kohlenstoffatome enthält.

**28.** Neue Verbindungen nach Anspruch 27, dadurch gekennzeichnet, daß A die Methylengruppe ist.

**29.** Neue Verbindungen nach einem der Ansprüche 21 bis 28, dadurch gekennzeichnet, daß die Gruppe $R_j$ die Gruppe $-CH_2\text{-}PO_3H_2$, gegebenenfalls in Salzform, ist.

**30.** Neue Verbindungen nach einem der Ansprüche 21 bis 28, dadurch gekennzeichnet, daß die Gruppe $R_j$ die Methylgruppe ist.

**31.** Neue Verbindungen nach einem der Ansprüche 21 bis 28, dadurch gekennzeichnet, daß die Gruppe $R_j$ die Gruppe $-C_2H_4N(CH_2\text{-}PO_3H_2)_2$, gegebenenfalls in Salzform, ist.

**32.** Neue Verbindungen nach einem der Ansprüche 21 bis 31, dadurch gekennzeichnet, daß die Salze Natrium-, Calcium- oder Diethanolaminsalze sind.

**33.** Neue Verbindungen nach einem der Ansprüche 21 bis 32, dadurch gekennzeichnet, daß "n" zwischen 1 und 10

000 liegt, diese Zahlen eingeschlossen.

**34.** Neue Verbindungen nach Anspruch 33, dadurch gekennzeichnet, daß "n" zwischen 1 und 500 liegt, diese Zahlen eingeschlossen.

**35.** Neue Verbindungen nach Anspruch 34, dadurch gekennzeichnet, daß "n" zwischen 1 und 250 liegt, diese Zahlen eingeschlossen.

**36.** Neue Verbindungen nach einem der Ansprüche 21 bis 35, dadurch gekennzeichnet, daß die Summe "r + q" kleiner als 3 ist.

**37.** Neue Verbindungen nach Anspruch 36, dadurch gekennzeichnet, daß die Summe "r + q" gleich 1 ist.

**38.** Neue Verbindungen nach einem der Ansprüche 21 bis 37, dadurch gekennzeichnet, daß "y" gleich 1 ist.

**39.** Verwendung der Verbindungen (I) oder ihrer Salze, definiert in Anspruch 1, als Hilfsmittel zur Aufrechterhaltung der Flüssigkeit von hydraulischem Binderpasten.

**40.** Verwendung nach einem der Ansprüche 1 bis 20 oder nach Anspruch 29, dadurch gekennzeichnet, daß die Verbindungen (I) oder ihre Salze kombiniert mit anderen Additiven, insbesondere mit anderen Verflüssigern, verwendet werden.

FIGURE 1

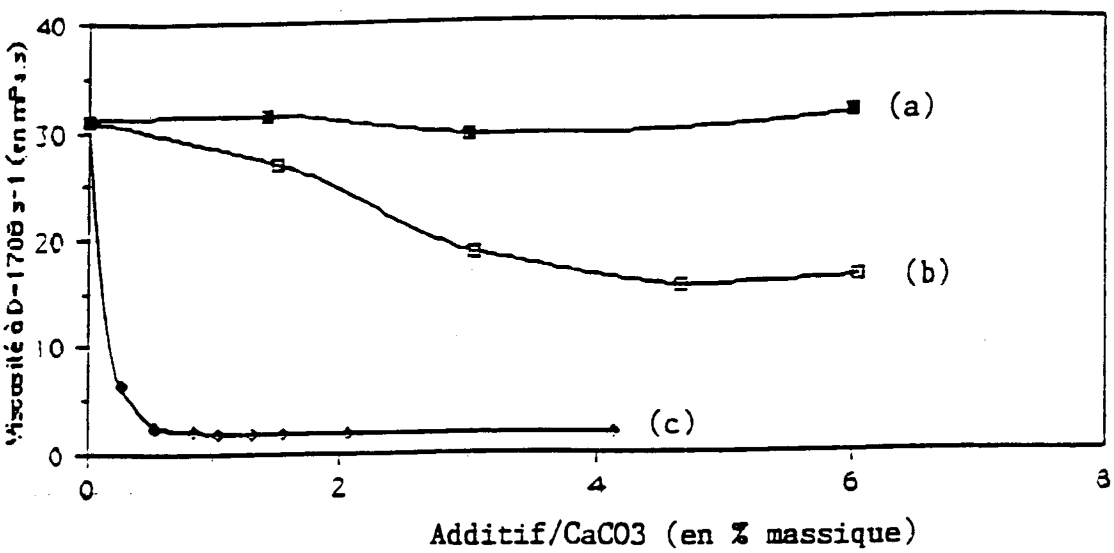


FIGURE 2

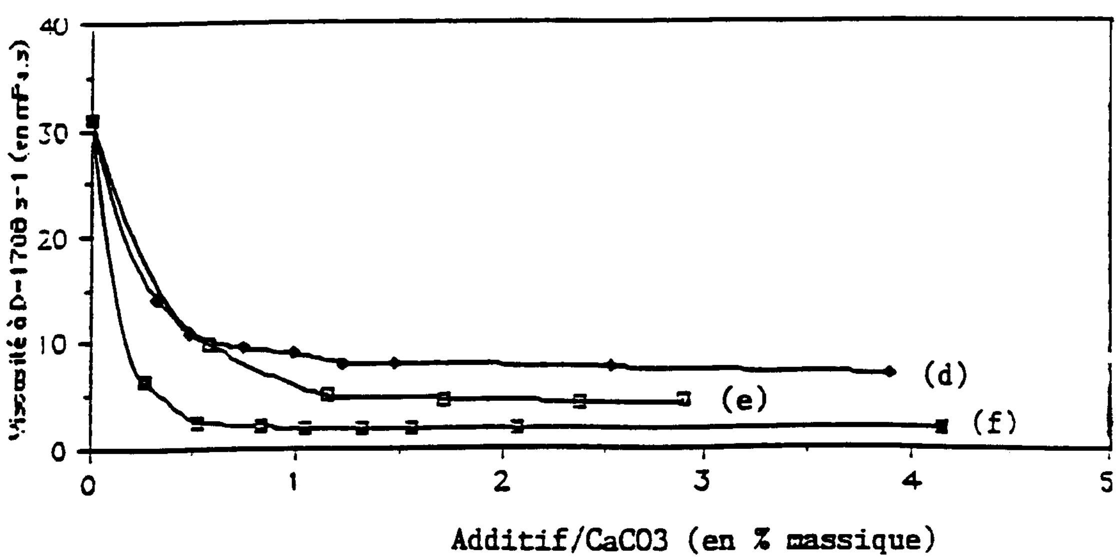

FIGURE 3

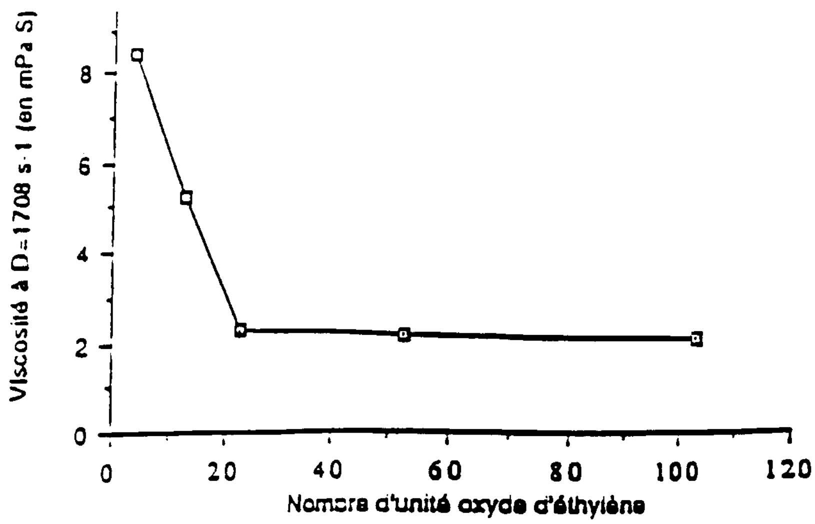


FIGURE 4

Fluidification d'une suspension aqueuse

de Cr203 à 60 % par le composé C5

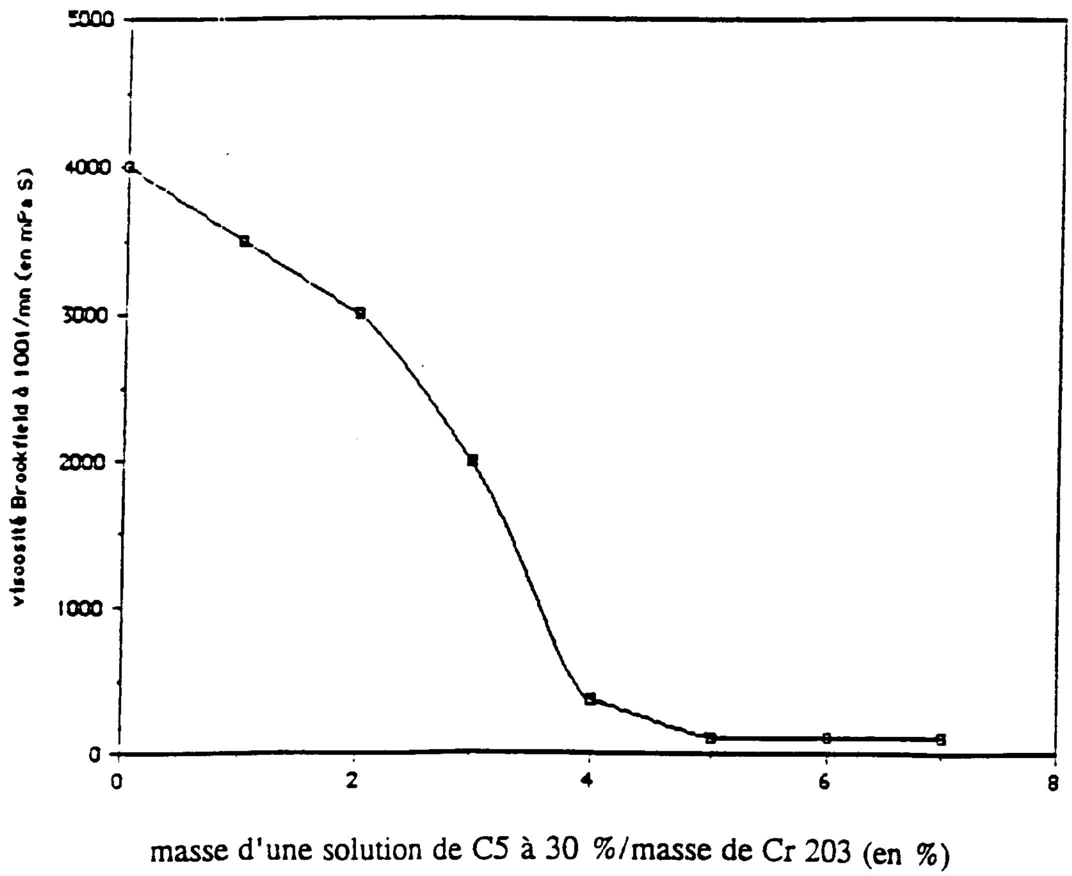

FIGURE 5

Fluidification d'une suspension aqueuse

de Fe2O3 à 60% par le composé C5

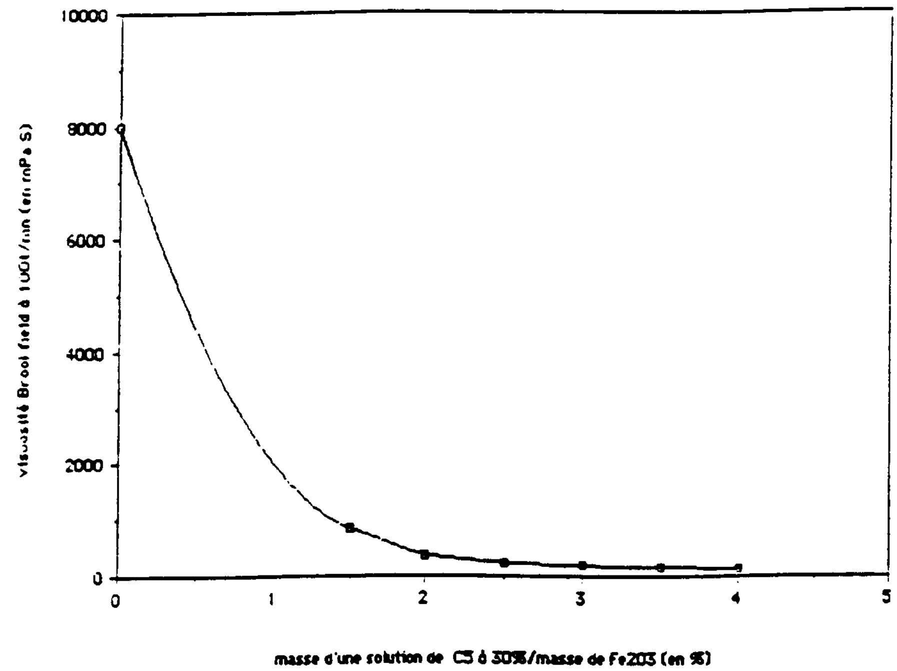


FIGURE 6

Epaississement d'une suspension de CaCO3 à 40 %

(préalablement fluidifiée) par ajout d'un électrolyte (ici CaCl2)

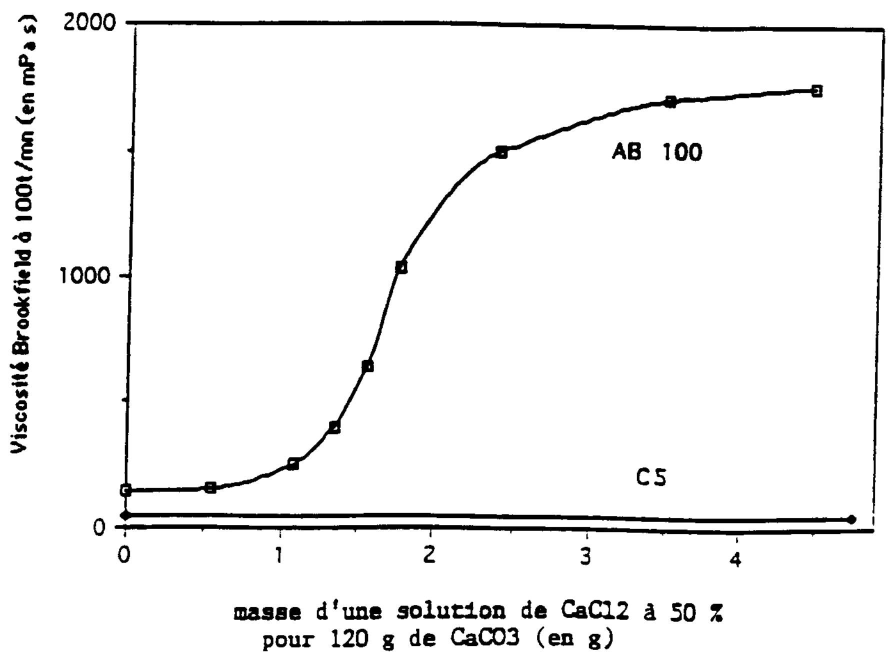

FIGURE 7

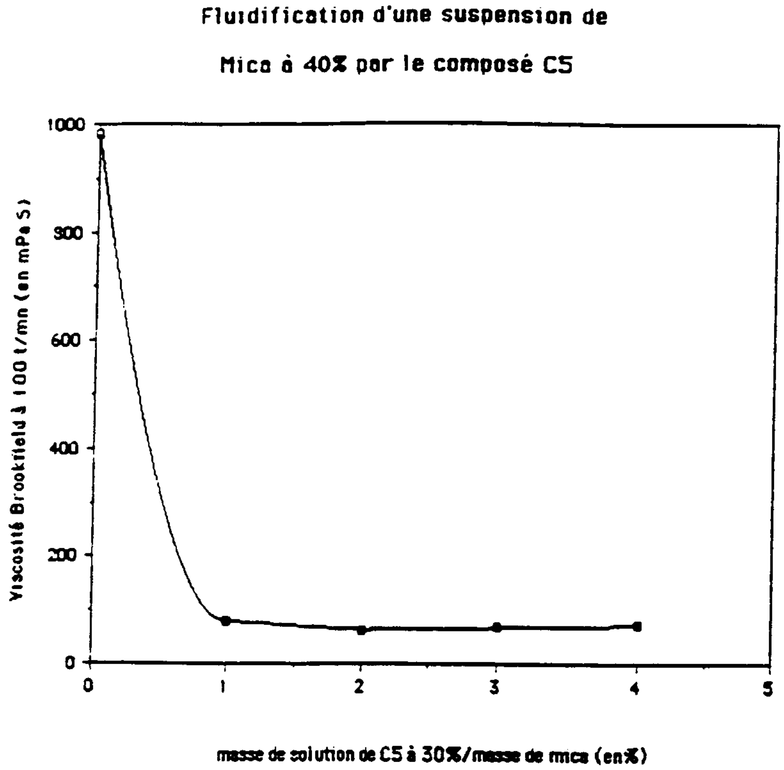


FIGURE 8